(19) **Europäisches Patentamt**
**European Patent Office**
**Office européen des brevets**

(11) **EP 2 117 159 A1**

(12) **EUROPEAN PATENT APPLICATION**
published in accordance with Art. 153(4) EPC

(43) Date of publication:
**11.11.2009 Bulletin 2009/46**

(51) Int Cl.:
*H04L 9/14* (2006.01)　　　*H04L 9/26* (2006.01)

(21) Application number: **07860571.4**

(86) International application number:
**PCT/JP2007/075376**

(22) Date of filing: **26.12.2007**

(87) International publication number:
**WO 2008/081975 (10.07.2008 Gazette 2008/28)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.12.2006 JP 2006356594**

(71) Applicant: **N-Crypt, Inc.**
**Yokkaichi-shi, Mie 512-8044 (JP)**

(72) Inventor: **NAKAMURA, Takatoshi**
**Yokkaichi-shi**
**Mie 512-8044 (JP)**

(74) Representative: **Skone James, Robert Edmund**
**Gill Jennings & Every LLP**
**Broadgate House**
**7 Eldon Street**
**London EC2M 7LH (GB)**

(54) **INFORMATION PROCESSING DEVICE, INFORMATION PROCESSING METHOD AND COMPUTER PROGRAM**

(57) Encrypted data is prevented from being decrypted to avoid data leakage. The encrypted data obtained by encrypting data to be processed corresponds to an enumeration of header data (501) and multiple divisional encrypted data (502). Each of the divisional encrypted data (502) except for the last one contains information indispensable for decrypting the next divisional encrypted data (502). In the present invention, the first divisional encrypted data (502) is destroyed at appropriate timing to prevent the encrypted data from being decrypted.

FIG. 4

**Description**

Technical Field

The present invention relates to a technique for reducing the risk of data leakage.

Background of the Invention

The demands on security are growing everyday.

Data is leaked in various ways. For example, data is leaked from a computer connected to a network environment by unauthorized access or an interruption to a communication path. When data is recorded on a recording medium included in a computer or a portable recording medium, data leakage occurs from a stolen computer or portable recording medium.

Specifically, data is constantly exposed to the risk of leakage as long as it exists.

In view of such a risk, it is preferred that data be deleted immediately after the use or as soon as it is no longer needed. However, it is troublesome for users to take such an extra effort. Moreover, data deletion performed on a computer by a general processing merely deletes data in a file management area. Since the content of data (more precisely, of a file) itself remains in a hard disk in most cases, it is difficult to completely delete the data. It is certain that there exists software for writing data "0" or "1" over a data string of existing data to completely delete the existing data for the purpose of completely deleting the data on a hard disk (more precisely, the existing data is turned into completely nonsignificant data or a sort of "dust" data). However, since such a processing takes an extremely long time, it is difficult for users to perform the processing on a routine basis.

The inventor (s) of the present invention has conducted studies on the security problem as described above to find out the following point. The point is related to an encryption technique which the inventor(s) has studied on a daily basis.

Encrypted data obtained by encrypting appropriate plaintext data (referred to as "data to be processed" throughout this specification) is completely nonsignificant unless the encrypted data is decrypted. In this regard, the encrypted data has a strong similarity to the "dust" data overwritten with the data "0" or "1" described above. Extending the idea, the encrypted data is turned into completely nonsignificant "dust" data as soon as the decryption of the encrypted data becomes impossible.

Further advancement of the above-described idea brought the inventor(s) of the present invention to the following. For encrypted data, in particular, encrypted data containing information necessary for decryption as a part thereof, the destruction of the part containing the information necessary for decryption makes the decryption of the encrypted data impossible. As a result, the encrypted data can be turned into "dust" data even without being deleted. Such a data destruction method (the "destruction" herein produces substantially the same effect as that of "deletion") takes a much shorter time than the overwriting of all the data with "0" or "1" data. Therefore, the data destruction method is suitable for the user's daily use.

The present invention is devised based on the above-described idea and provides a technique for preventing encrypted data generated by encrypting data to be processed from being decrypted to produce the same effect as that of the complete deletion of the data to be processed.

Disclosure of the Invention

In order to solve the above-describedproblem, the inventor (s) of the present invention proposes the following inventions. The inventions of this specification can be classified into a basic invention and first to third inventions based on the basic invention.

The basic invention is as follows.

The basic invention relates to an information processing apparatus for processing encrypted data obtained by encrypting plaintext data to be processed, the encrypted data containing specifying information for decrypting the encrypted data, including recording means for recording the encrypted data, detection means for detecting the specifying information from the encrypted data, and processing means for causing an irreversible change in the specifying information detected by the detection means in the encrypted data recorded in the recording means when a predetermined condition is satisfied.

The encrypted data used in the information processing apparatus contains the specifying information for decrypting the encrypted data. In decrypting the encrypted data, the specifying information is necessarily required. Specifically, if an irreversible change is caused in the specifying information, the encrypted data can no longer be decrypted. The encrypted data which can no longer be decrypted as described above can be referred to as "dust" data. The prevention of the decryption of the encrypted data in this manner produces the same effect as that of the complete deletion of the data to be processed.

The same effect as that of the basic invention can also be obtained by the following method.

The method is an information processing method for processing encrypted data obtained by encrypting plaintext data to be processed, the encrypted data containing specifying information for decrypting the encrypted data, the method being executed in an information processing apparatus including recording means and processing means, the method including the steps, which are executed by the processing means, of recording the encrypted data in the recording means, detecting the specifying information from the encrypted data, and causing an irreversible change in the specifying information detected in the detection process in the encrypted data recorded in the recording means when a predetermined condition is satisfied.

The effect obtained by the above-described information processing apparatus can also be obtained by, for example, the following computer program. By using the following computer program, the same effect as that of the above-described invention can be obtained with a general computer.

The program is a computer program for processing encrypted data obtained by encrypting plaintext data to be processed, the encrypted data containing specifying information for decrypting the encrypted data, the computer program being for causing a computer included in an information processing apparatus including recording means and the computer connected thereto to execute the steps of recording the encrypted data in the recording means, detecting the specifying information from the encrypted data, and causing an irreversible change in the specifying information detected in the detection process in the encrypted data recorded in the recording means when a predetermined condition is satisfied.

Note that the predetermined condition in the basic invention can be the same as that of a trigger for starting the processing process for causing the irreversible change in the first to third inventions (any one of the input of the destruction trigger information, the determination that the timing specified by the timing specifying information has come, and the input of the decryption trigger information).

The first invention is an information processing apparatus for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption.

Further, the information processing apparatus includes: recording means for recording the encrypted data; destruction trigger input means for inputting destruction trigger information for starting a processing of preventing the encrypted data from being decrypted; detection means for detecting first divisional encrypted data corresponding to the divisional encrypted data which is a first to be decrypted in all the divisional encrypted data from the encrypted data; and processing means for receiving an input of the destruction trigger information upon input thereof to cause an irreversible change in the first divisional encrypted data detected by the detection means in the encrypted data recorded in the recording means.

In the encrypted data used in the information processing apparatus, each of the divisional encrypted data except for the last one to be decrypted contains the specifying information for specifying the key for decrypting the next divisional encrypted data to be decrypted. The encrypted data is decrypted sequentially by performing a process of decrypting the first divisional encrypted data back into the divisional plaintext data, using the key specified by the specifying information extracted from the obtained divisional plaintext data to decrypt the second divisional encrypted data into the divisional plaintext data, using the key specified by the specifying information extracted form the obtained divisional plaintext data to decrypt the third divisional encrypted data into the divisional plaintext data, and so forth. Therefore, if an irreversible change is caused in the divisional encrypted data which should be the first to be decrypted, the entire encrypted data can no longer be decrypted. The encrypted data which can be no longer decrypted can be referred to as "dust" data. The prevention of the decryption of the encrypted data in this manner produces the same effect as that of the complete deletion of the data to be processed.

The same effect as that of the present invention can also be obtained by, for example, the following method.

There is provided an information processing method executed in an information processing apparatus including recording means, destruction trigger input means, and processing means, for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption.

The method includes the steps, executed by the processing means, of: recording the encrypted data in the recording means; receiving destruction trigger information for starting a processing of preventing the encrypted data from being decrypted from the destruction trigger input means; detecting first divisional encrypted data which is a first to be decrypted in all the divisional encrypted data from the encrypted data; and causing an irreversible change in the first divisional encrypted data detected in the step of detecting in the encrypted data recorded in the recording means when the destruction trigger information is received.

The same effect as that of the above-described invention can also be obtained by, for example, the following computer program. By using the following computer program, the same effect as that of the above-described invention can be obtained with a general computer.

There is provided a computer program for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption, the computer program being for causing a computer included in an information processing apparatus including recording means, destruction trigger input means, and the computer connected thereto to execute the following steps.

The steps are: recording the encrypted data in the recording means; receiving destruction trigger information for starting a processing of preventing the encrypted data from being decrypted from the destruction trigger input means; detecting first divisional encrypted data which is a first to be decrypted in all the divisional encrypted data from the encrypted data; and causing an irreversible change in the first divisional encrypted data detected in the step of detecting in the encrypted data recorded in the recording means when the destruction trigger information is received.

As described above, in the encrypted data used in the information processing apparatus according to the first invention, each of the divisional encrypted data except for the last one to be decrypted contains the specifying information for specifying the key for decrypting the next divisional encrypted data to be decrypted. The encrypted data used in the information processing apparatus according to the first invention may contain first specifying information for specifying the key for decrypting the divisional encrypted data which is the first to be decrypted.

Each of the keys for decrypting the divisional encrypted data which are the second and subsequent to be decrypted is specified by the specifying information extracted from the divisional plaintext data obtained by decrypting the divisional encrypted data which is decrypted immediately before. In order to decrypt the divisional encrypted data which is the first tobedecrypted, however, the first specifying information for specifying the key for decrypting the divisional encrypted data of interest is generally required. The first specifying information is embedded in the encrypted data in some cases and is not embedded in the encrypted data as a specific rule shared between, for example, an apparatus which has encrypted the encrypted data and another apparatus which is due to decrypt the encrypted data in other cases. When the first specifying information is embedded in the encrypted data, the first invention can be constituted as follows.

The first invention in this case is an information processing apparatus for processing encrypted data wwhich is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption, the encrypted data containing first specifying information for specifying the key for decrypting the divisional encrypted data to be decrypted first.

Further, the information processing apparatus includes: recording means for recording the encrypted data; destruction trigger input means for inputting destruction trigger information for starting a processing of preventing the encrypted data from being decrypted; detection means for detecting the first specifying information contained in the encrypted data or first divisional encrypted data corresponding to the divisional encrypted data which is a first to be decrypted from the encrypted data; and processing means for receiving an input of the destruction trigger information upon input thereof to cause an irreversible change in the first specifying information or the first divisional encrypted data, which is detected by the detection means, in the encrypted data recorded in the recording means.

Specifically, the information processing apparatus causes an irreversible change in the divisional encrypted data which should be the first to be decrypted or the first specifying information used for decrypting the divisional encrypted data which should be the first to be decrypted in all the divisional encrypted data. By executing such a process, the encrypted data can no longer be decrypted. The encrypted data which can no longer be decrypted as described above can be referred to as "dust" data. The prevention of the decryption of the encrypted data in this manner produces the same effect as that of the complete deletion of the data to be processed.

The same effect as that of the present invention can also be obtained by, for example, the following method.

There is provided an information processing method executed in an information processing apparatus including recording means, destruction trigger input means, and processing means, for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption, the encrypted data containing first specifying information for specifying the key for decrypting the divisional encrypted data which is a first to be decrypted.

The method includes the steps, executed by the processing means, of: recording the encrypted data in the recording means; receiving destruction trigger information for starting a processing of preventing the encrypted data from being decrypted from the destruction trigger input means; detecting the first specifying information contained in the encrypted data or first divisional encrypted data which is the first to be decrypted in all the divisional encrypted data from the encrypted data; and causing an irreversible change in the first specifying information or the first divisional encrypted data, which is detected in the step of detecting, in the encrypted data recorded in the recording means when the destruction trigger information is received.

The same effect as that of the above-described invention can also be obtained by, for example, the following computer program. By using the following computer program, the same effect as that of the above-described invention can be obtained with a general computer.

There is provided a computer program for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption, the encrypted data containing first specifying information for specifying the key for decrypting the divisional encrypted data which is a first to be decrypted, the computer program being for causing a computer included in an information processing apparatus including recording means, destruction trigger input means, and the computer connected thereto to execute the following steps.

The steps are: recording the encrypted data in the recording means; receiving destruction trigger information for starting a processing of preventing the encrypted data from being decrypted from the destruction trigger input means; detecting the first specifying information contained in the encrypted data or first divisional encrypted data which is the first to be decrypted in all the divisional encrypted data from the encrypted data; and causing an irreversible change in the first specifying information or the first divisional encrypted data, which is detected in the step of detecting, in the encrypted data recorded in the recording means when the destruction trigger information is received.

The second invention is an information processing apparatus for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption, the encrypted data containing timing specifying information for specifying timing to prevent the encrypted data from being decrypted.

Further, the information processing apparatus includes: recording means for recording the encrypted data; timing specifying information reading means for reading out the timing specifying information from the encrypted data; detection means for detecting first divisional encrypted data corresponding to the divisional encrypted data to be decrypted first in all the divisional encrypted data from the encrypted data; and processing means for monitoring whether or not the timing specified by the timing specifying information read by the timing specifying information reading means has come and causing an irreversible change in the first divisional encrypted data detected by the detection means if the timing has come.

The encrypted data used in the information processing apparatus is approximately the same as that in the first invention, but further includes the timing specifying information for specifying the timing to prevent the encrypted data from being decrypted. The information processing apparatus causes an irreversible change in the first divisional encrypted data to turn the encrypted data into a sort of "dust" data as in the first invention. The timing to turn the encrypted data into the "dust" data is controlled by the timing specifying information. The information processing apparatus, for example, constantly monitors whether or not the timing to prevent the encrypted data specified by the timing specifying information from being decrypted has come and causes, if the timing has come, an irreversible change in the first divisional encrypted data immediately after the timing or after elapse of a certain period of time after the timing, as in the first invention. As described in the related art, there is always the risk of data leakage even if the data is encrypted. The automatic execution of the above-described processing of turning the encrypted data into a sort of "dust" data by the information processing apparatus is significant in view of the prevention of leakage of the data to be processed.

The same effect as that of the present invention can also be obtained by, for example, the following method.

There is provided an information processing method executed in an information processing apparatus including recording means and processing means, for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption, the encrypted data containing timing specifying information for specifying timing to prevent the encrypted data from being decrypted.

The method includes the steps, executed by the processing means, of: recording the encrypted data in the recording means; reading the timing specifying information from the encrypted data; detecting first divisional encrypted data which is a first to be decrypted in all the divisional encrypted data from the encrypted data; and monitoring whether or not the timing specified by the timing specifying information read in the step of reading has come and causing an irreversible change in the first divisional encrypted data detected in the step of detecting if the timing has come.

The same effect as that of the above-described invention can also be obtained by, for example, the following computer program. By using the following computer program, the same effect as that of the above-described invention can be obtained with a general computer.

There is provided a computer program for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption, the encrypted data containing timing specifying information for specifying timing to prevent the encrypted data from being decrypted, the computer program being for causing a computer included in an information processing apparatus including the computer connected to recording means to execute the following steps.

The steps are: recording the encrypted data in the recording means; reading the timing specifying information from the encrypted data; detecting first divisional encrypted data which is a first to be decrypted in all the divisional encrypted data from the encrypted data; and monitoring whether or not the timing specified by the timing specifying information read in the step of reading has come and causing an irreversible change in the first divisional encrypted data detected in the step of detecting if the timing has come.

As described above, in the encrypted data used in the information processing apparatus according to the second invention, each of the divisional encrypted data except for the last one to be decrypted contains the specifying information for specifying the key for decrypting the next divisional encrypted data to be decrypted. Herein, the encrypted data used in the information processing apparatus according to the second invention may contain first specifying information for specifying the key for decrypting the divisional encrypted data which is the first to be decrypted.

When the first specifying information is embedded in the encrypted data, the second invention can be constituted as follows.

The second invention in this case is an information processing apparatus for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption, the encrypted data containing first specifying information for specifying the key for decrypting the divisional encrypted data which is a first to be decrypted and timing specifying information for specifying timing to prevent the encrypted data from being decrypted.

Further, the information processing apparatus includes: recording means for recording the encrypted data; timing specifying information reading means for reading out the timing specifying information from the encrypted data; detection means for detecting the first specifying information contained in the encrypted data or first divisional encrypted data corresponding to the divisional encrypted data which is the first to be decrypted in all the divisional encrypted data from the encrypted data; and processing means for monitoring whether or not the timing specified by the timing specifying information read by the timing specifying information reading means has come and causing an irreversible change in the first specifying information or the first divisional encrypted data, which is detected by the detection means, if the timing has come.

Specifically, the information processing apparatus causes an irreversible change in the divisional encrypted data which should be the first to be decrypted or the first specifying information used for decrypting the divisional encrypted data which should be the first to be decrypted in all the divisional encrypted data. By executing such a processing, the encrypted data can no longer be decrypted. The encrypted data which can no longer be decrypted as described above can be referred to as "dust" data. The prevention of the decryption of the encrypted data in this manner produces the same effect as that of the complete deletion of the data to be processed.

The same effect as that of the present invention can also be obtained by, for example, the following method.

There is provided an information processing method executed in an information processing apparatus including recording means and processing means, for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption, the encrypted data containing first specifying information for specifying the key for decrypting the divisional encrypted data which is a first to be decrypted and timing specifying information for specifying timing to prevent the encrypted data from being decrypted.

The method includes the steps, executed by the processing means, of: recording the encrypted data in the recording means; reading the timing specifying information from the encrypted data; detecting the first specifying information contained in the encrypted data or first divisional encrypted data which is the first to be decrypted in all the divisional encrypted data from the encrypted data; and monitoring whether or not the timing specified by the timing specifying information read in the step of reading has come and causing an irreversible change in the first specifying information or the first divisional encrypteddata, which is detected in the step of detecting, if the timing has come.

The same effect as that of the above-described invention can also be obtained by, for example, the following computer program. By using the following computer program, the same effect as that of the above-described invention can be obtained with a general computer.

There is provided a computer program for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption, the encrypted data containing first specifying information for specifying the key for decrypting divisional encrypted data which is a first to be decrypted and timing specifying information for specifying timing to prevent the encrypted data from being decrypted, the computer program being for causing a computer included in an information processing apparatus including the computer connected to recording means to execute the following steps.

The steps are: recording the encrypted data in the recording means; reading the timing specifying information from the encrypted data; detecting the first specifying information contained in the encrypted data or first divisional encrypted data which is the first to be decrypted in all the divisional encrypted data from the encrypted data; and monitoring whether or not the timing specified by the timing specifying information read in the step of reading has come and causing an irreversible change in the first specifying information or the first divisional encrypted data, which is detected in the step of detecting, if the timing has come.

The third invention is an information processing apparatus for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption, the encrypted data containing timing specifying information for specifying timing to prevent the encrypted data from being decrypted.

Further, the information processing apparatus includes: recording means for recording the encrypted data; decryption means capable of decrypting the encrypted data; decryption trigger input means for inputting decryption trigger information for starting the decryption of the encrypted data; timing specifying information reading means for reading out the timing specifying information from the encrypted data when the decryption trigger information is input from the decryption trigger input means; detection means for detecting first divisional encrypted data which is a first to be decrypted in all the divisional encrypted data from the encrypted data; and processing means for receiving the timing specifying information read by the timing specifying information reading means upon input of the decryption trigger information to determine whether or not the timing specified by the timing specifying information has come and allowing the decryption means to decrypt the encrypted data if the timing has not come yet while causing an irreversible change in the first divisional encrypted data detected by the detection means if the timing has come.

The encrypted data used in the information processing apparatus is the same as that in the second invention and contains the timing specifying information for specifying the timing to prevent the encrypted data from being decrypted. As in the second invention, the information processing apparatus controls the timing of causing an irreversible change in the first divisional encrypted data by the timing specifying information. In contrast to the first and second inventions in which the decryption of the encrypted data is not necessarily possible, the information processing apparatus according to the third invention can decrypt the encrypted data. On that basis, when the decryption trigger information for prompting the decryption of the encrypted data is input, the information processing apparatus according to the third invention receives the timing specifying information read by the timing specifying information reading means to determine whether or not the timing specified by the timing specifying information has come and allows the decryption means to decrypt the encrypted data if the timing has not come yet while causing an irreversible change in the first divisional encrypted data detected by the detection means if the timing has come. As described above, when a user performs a decryption operation, the information processing apparatus according to the third invention decrypts the encrypted data which is intended to be decrypted by the user or turns the encrypted data into a sort of "dust" data. This is also effective in preventing the data to be processed from being leaked due to the encrypted data leakage.

The same effect as that of the present invention can also be obtained by, for example, the following method.

There is provided an information processing method executed in an information processing apparatus including recording means, decryption trigger input means, and processing means, for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption, the encrypted data containing timing specifying information for specifying timing to prevent the encrypted data from being decrypted.

The method includes the steps, executed by the processing means, of: recording the encrypted data in the recording means; receiving decryption trigger information for starting the decryption of the encrypted data from the decryption trigger input means; reading the timing specifying information from the encrypted data when the step of receiving occurs; detecting first divisional encrypted data which is a first to be decrypted in all the divisional encrypted data from the encrypted data; and receiving the timing specifying information read in the step of reading when the step of receiving occurs to determine whether or not the timing specified by the timing specifying information has come and decrypting the encrypted data if the timing has not come yet while causing an irreversible change in the first divisional encrypted data detected in the step of detecting if the timing has come.

The same effect as that of the above-described invention can also be obtained by, for example, the following computer program. By using the following computer program, the same effect as that of the above-described invention can be obtained with a general computer.

There is provided a computer program for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption, the encrypted data containing timing specifying information for specifying timing to prevent the encrypted data from being decrypted, the computer program being for causing a computer included in an information processing apparatus including recording means, decryption trigger input means, and the computer connected thereto to execute the following steps.

The steps are: recording the encrypted data in the recording means; receiving decryption trigger information for starting the decryption of the encrypted data from the decryption trigger input means; reading the timing specifying information from the encrypted data when the step of receiving occurs; detecting first divisional encrypted data which is a first to be decrypted in all the divisional encrypted data from the encrypted data; and receiving the timing specifying information read in the step of reading when the step of receiving occurs to determine whether or not the timing specified by the timing specifying information has come and decrypting the encrypted data if the timing has not come yet while causing an irreversible change in the first divisional encrypted data detected in the step of detecting if the timing has come.

As described above, in the encrypted data used in the information processing apparatus according to the third invention, each of the divisional encrypted data except for the last one to be decrypted contains the specifying information for specifying the key for decrypting the next divisional encrypted data to be decrypted. Herein, the encrypted data used in the information processing apparatus according to the third invention may contain first specifying information for specifying the key for decrypting the divisional encrypted data which is the first to be decrypted.

When the first specifying information is embedded in the encrypted data, the third invention can be constituted as follows.

The third invention in this case is an information processing apparatus for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption, the encrypted data containing first specifying information for specifying the key for decrypting the divisional encrypted data which is a first to be decrypted and timing specifying information for specifying timing to prevent the encrypted data from being decrypted.

Further, the information processing apparatus includes: recording means for recording the encrypted data; decryption means capable of decrypting the encrypted data; decryption trigger input means for inputting decryption trigger information for starting the decryption of the encrypted data; timing specifying information reading means for reading out the timing specifying information from the encrypted data when the decryption trigger information is input from the decryption trigger input means; detection means for detecting the first specifying information contained in the encrypted data or first divisional encrypted data which is the first to be decrypted in all the divisional encrypted data ; and processing means for receiving the timing specifying information read by the timing specifying information reading means upon input of the decryption trigger information to determine whether or not the timing specified by the timing specifying information has come and allowing the decryption means to decrypt the encrypted data if the timing has not come yet while causing an irreversible change in the first specifying information or the first divisional encrypted data, which is detected by the detection means, if the timing has come.

Specifically, the information processing apparatus causes an irreversible change in the divisional encrypted data which should be the first to be decrypted or the first specifying information used for decrypting the divisional encrypted data which should be the first to be decrypted in all the divisional encrypted data. By executing such a processing, the encrypted data can no longer be decrypted. The encrypted data which can no longer be decrypted as described above can be referred to as "dust" data. The prevention of the decryption of the encrypted data in this manner produces the same effect as that of the complete deletion of the data to be processed.

The same effect as that of the present invention can also be obtained by, for example, the following method.

There is provided an information processing method executed in an information processing apparatus including recording means, decryption trigger input means, and processing means, for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption, the encrypted data containing first specifying information for specifying the key for decrypting the divisional encrypted data which is a first to be decrypted and timing specifying information for specifying timing to prevent the encrypted data from being decrypted.

The method includes the steps, executed by the processing means, of: recording the encrypted data in the recording means; receiving decryption trigger information for starting the decryption of the encrypted data from the decryption trigger input means; reading the timing specifying information from the encrypted datawhen the step of receiving occurs; detecting the first specifying information contained in the encrypted data or first divisional encrypted data which is the first to be decrypted in all the divisional encrypted data from the encrypted data; and receiving the timing specifying information read in the step of reading when the step of receiving occurs to determine whether or not the timing specified by the timing specifying information has come and decrypting the encrypted data if the timing has not come yet while causing an irreversible change in the first specifying information or the first divisional encrypteddata, which is detected in the step of detecting, if the timing has come.

The same effect as that of the above-described invention can also be obtained by, for example, the following computer program. By using the following computer program, the same effect as that of the above-described invention can be obtained with a general computer.

There is provided a computer program for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for a last one to be decrypted containing specifying information for specifying a key for decrypting a next divisional encrypted data to be decrypted to enable the decryption, the encrypted data containing first specifying information for specifying the key for decrypting divisional encrypted data which is a first to be decrypted and timing specifying information for specifying timing to prevent the encrypted data from being decrypted, the computer program being for causing a computer included in an information processing apparatus including recording means, decryption trigger input means, and the computer connected thereto to execute the following steps.

The steps are: recording the encrypted data in the recording means; receiving decryption trigger information for starting the decryption of the encrypted data from the decryption trigger input means; reading the timing specifying information from the encrypted data when the step of receiving occurs; detecting the first specifying information contained in the encrypted data or first divisional encrypteddatawhich is the first to be decrypted in all the divisional encrypted data from the encrypted data; and receiving the timing specifying information read in the step of reading when the step of receiving occurs to determine whether or not the timing specified by the timing specifying information has come and decrypting the encrypted data if the timing has not come yet while causing an irreversible change in the first specifying information or the first divisional encrypteddata, which is detected in the step of detecting, if the timing has come.

The following is common to the basic invention and the first to third inventions.

The processing means in the inventions of the present application causes an irreversible change in the first divisional encrypted data (in the first specifying information or the first divisional encrypted data in some cases). The irreversible change can be caused by, for example, writing appropriate data over the first divisional encrypted data (the first specifying information or the first divisional encrypted data in some cases) or irreversibly converting the first divisional encrypted data (the first specifying information or the first divisional encrypted data in some cases). For the irreversible conversion, for example, after performing a processing of truncating the decimal numbers or the first digits of the result of an appropriate calculation performed on a data string of the first divisional encrypted data (the first specifying information or the first divisional encrypted data in some cases), the first divisional encrypted data (the first specifying information or the first divisional encrypted data in some cases) may be replaced by the thus processed result of calculation. Alternatively, the first divisional encrypted data (the first specifying information or the first divisional encrypted data in some cases) may be subjected to a JPEG conversion.

Brief Description of the Drawings

Fig. 1 is a view illustrating the entire configuration of an encryption system according to a first embodiment.
Fig. 2 is a hardware configuration of an encryption processing apparatus included in the encryption system illustrated in Fig. 1.
Fig. 3 is a block diagram illustrating a configuration of an encryption device included in the encryption processing apparatus illustrated in Fig. 2.
Figs. 4 are diagrams illustrating data structure of encrypted data generated in the encryption processing apparatus illustrated in Fig. 2.
Fig. 5 is a diagram illustrating a hardware configuration of a decryption processing apparatus included in the encryption system illustrated in Fig. 1.
Fig. 6 is a block diagram illustrating a configuration of a decryption device included in the decryption processing apparatus illustrated in Fig. 5.
Fig. 7 is a functional block diagram illustrating functional blocks generated in the decryption processing apparatus illustrated in Fig. 1.
Fig. 8 is a flowchart illustrating a flow of an encryption processing executed in the encryption system illustrated in Fig. 1.
Fig. 9 is a flowchart illustrating a flow of a decryption processing executed in the encryption system illustrated in Fig. 1.
Fig. 10 is a block diagram illustrating a configuration of an encryption device included in an encryption processing apparatus in a variation.
Fig. 11 is a block diagram illustrating a configuration of a decryption device included in a decryption processing apparatus in the variation.

Best Mode for Carrying Out the Invention

Hereinafter, a preferred embodiment of the present invention and a variation thereof will be described.

In the description of the embodiment and the variation, the same object is denoted by the same reference numeral. The overlapping description is omitted depending on the case.

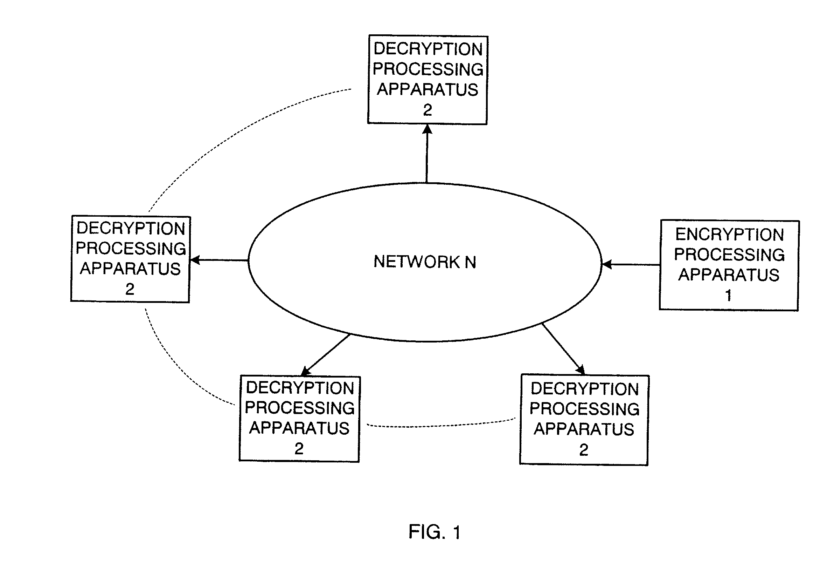

In this embodiment, an encryption system including an encryption processing apparatus 1 and a plurality of decryption processing apparatuses 2 as illustrated in Fig. 1 is described as an embodiment of the present invention. The decryption processing apparatus 2 corresponds to an information processing apparatus of the present invention.

The encryption processing apparatus 1 and the decryption process ing apparatuses 2 are connected to each other through a network N such as a local area network (LAN) or the like to enable the transmission of encrypted data generated by the encryption processing apparatus 1 in the manner described below to each of the decryption processing apparatuses 2.

It is certain that the encryption processing apparatus 1 and the decryption processing apparatuses 2 are not necessarily connected to each other through the network N. When the encryption processing apparatus 1 and the decryption processing apparatuses 2 are not connected to each other, however, each of the decryption processing apparatuses 2 is required to be able to receive the encrypted data generated by the encryption processing apparatus 1 through, for example, a recording medium such as a CD-ROM, from the encryption processing apparatus 1. The description of a data writer for recoding the encrypted data on the recording medium or a data reader for reading the encrypted data from the recording medium, which are required for the reception of the encrypted data, is omitted because they are generally employed techniques.

At least one decryption processing apparatus 2 is sufficient. In some cases, the encryption processing apparatus 1 also serves as the decryption processing apparatus 2.

The configurations of the encryption processing apparatus 1 and the decryption processing apparatus 2 will be described. First, the configuration of the encryption processing apparatus 1 will be described.

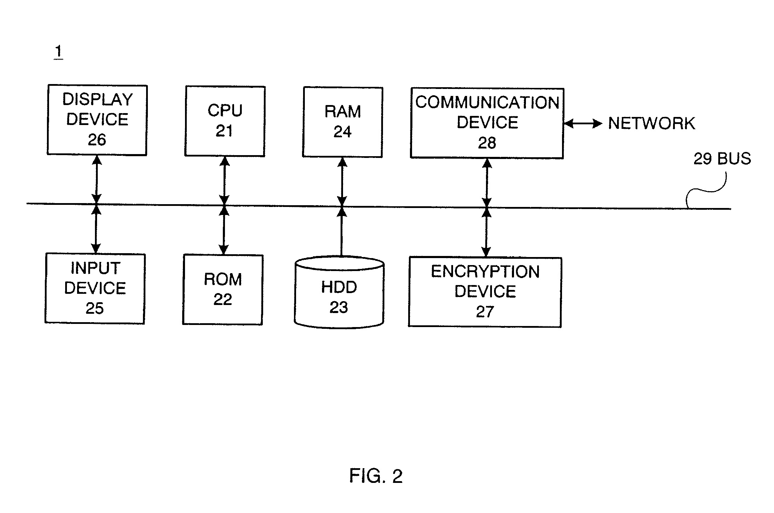

Fig. 2 illustrates a hardware configuration of the encryption processing apparatus 1.

In this embodiment, the encryption processing apparatus 1 includes a central processing unit (CPU) 21, a read only memory (ROM) 22, a hard disk drive (HDD) 23, a random access memory (RAM) 24, an input device 25, a display device 26, an encryption device 27, a communication device 28, and a bus 29. The CPU 21, the ROM 22, the HDD 23, the RAM 24, the input device 25, the display device 26, the encryption device 27, and the communication device 28 can exchange data through the bus 29.

A predetermined program and predetermined data (containing data to be processed in some cases including this embodiment, and also containing data necessary for executing the program) are recorded on the ROM 22 or the HDD 23. The CPU 21 controls the entire encryption processing apparatus 1 and executes a processing described below based on the program or the data recorded in the ROM 22 or the HDD 23. The RAM 24 is used as a working storage area for performing the processing in the CPU 21.

The input device 25 includes a keyboard, a mouse, or the like, and is used for command or data entry. The display device 26 includes a liquid crystal display (LCD), a cathode ray tube (CRT), or the like and is used for displaying the command, the input data, or a state of the processing described below.

The encryption device 27 encrypts the data to be processed, as described below.

The communication device 28 executes the communication with the decryption processing apparatuses 2 through the network N. The communication device 28 transmits the encrypted data to a destination designated by a MAC address or the like contained in a header of the encrypted data described below.

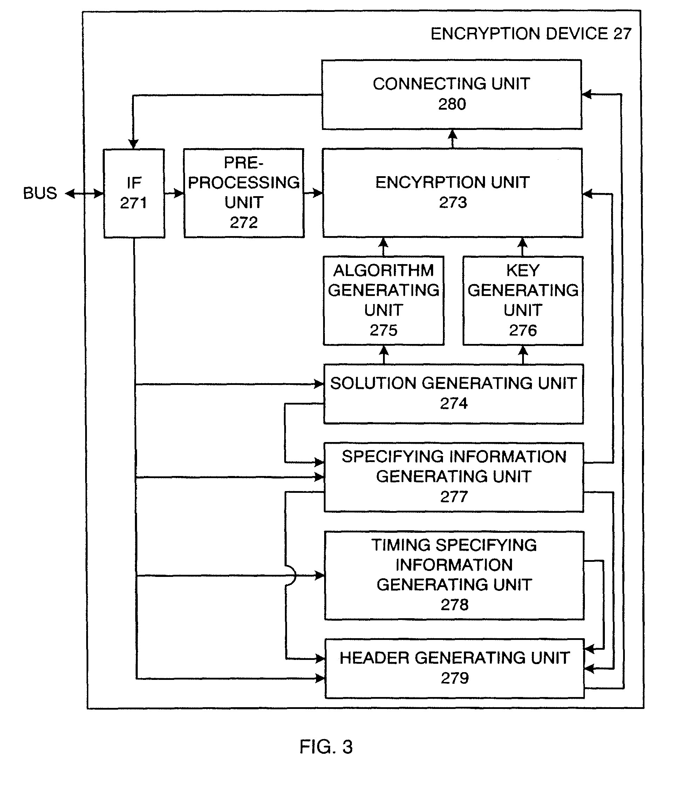

Next, the configuration of the encryption device 27 will be described. Fig. 3 is a block configuration diagram of the encryption device 27.

The encryption device 27 includes an interface unit 271, a pre-processing unit 272, an encryption unit 273, a solution generating unit 274, an algorithm generating unit 275, a key generating unit 276, a specifying information generating unit 277, a timing specifying information generating unit 278, a header generating unit 279, and a connecting unit 280.

The interface unit 271 receives and transmits data between the bus 29 and the communication device 28.

The interface unit 271 receives the data to be processed from the HDD 23 through the bus 29 and transmits the received data to be processed to the pre-processing unit 272. Upon reception of the data to be processed, the interface unit 271 transmits data indicating the reception of the data to be processed to the solution generating unit 274. The interface unit 271 also receives an input from the input device 25 to transmit the received input to the timing specifying information generating unit 278.

On the other hand, the interface unit 271 receives the encrypted data from the connecting unit 280 as described below to transmit the received encrypted data to the bus 29. The encrypted data is transmitted to the decryption processing apparatus 2 via the network N through the communication device 28.

The pre-processing unit 272 has a function of dividing the data to be processed, which is received from the bus 29 through the interface unit 271, into divisional plaintext data, each being composed of a predetermined number of bits, and then transmitting the obtained divisional plaintext data to the encryption unit 273. How to divide the data to be processed will be described below. The encryption unit 273 encrypts the divisional plaintext data in the order of the positions closer to the head in the data to be processed into divisional encrypted data. The first generated divisional encrypted data corresponds to first divisional encrypted data in this specification.

The encryption unit 273 has a function of receiving the divisional plaintext data from the pre-processing unit 272 and encrypting the received divisional plaintext data. The encryption unit 273 has another function of receiving specifying information described below from the specifying information generating unit 277 to mix the specifying information into the divisional plaintext data prior to the encryption.

The details of an encryption processing will be described below.

The solution generating unit 274 sequentially generates solutions. The solutions generated by the solution generating unit 274 of the encryption processing apparatus 1, which are generated in the same order, become always the same. A decryption device in the decryption processing apparatus 2 described below also includes a solution generating unit, which is the same as the solution generating unit 274 included in the encryption processing apparatus 1. Specifically, by the comparison between the solutions generated in the same order, the solution generated by the solution generating unit 274 included in the encryption processing apparatus 1 and that generated by the solution generating unit included in the decryption processing apparatus 2 become identical with each other. The solution in this embodiment is a pseudorandom number. The generated solution is transmitted to the algorithm generating unit 275, the key generating unit 276, and the specifying information generating unit 277.

Thealgorithmgeneratingunit 275 generates an algorithm based on the solution received from the solution generating unit 274. The algorithm is used for performing the encryption processing in the encryption unit 273.

The key generating unit 276 generates a key based on the solution received from the solution generating unit 274. The key is used for performing the encryption processing in the encryption unit 273.

The specifying information generating unit 277 generates specifying information based on the data received from, for example, the input device 25 operated by a user, through the interface unit 271.

The specifying information generating unit 277 generates the specifying information as information indicating the order of generation of the solution transmitted from the solution generating unit 274. The specifying information generated by the specifying information generating unit 277 is used for decrypting each of the above-described divisional encrypted data in the decryption processing apparatus 2. The specifying information directly specifies a solution used for decrypting each of the divisional encrypted data and indirectly specifies a key used for decrypting each of the divisional encrypted data.

The specifying information in this embodiment is plural. At least one of the plurality of specifying information is required to be different from the other specifying information. In this embodiment, the specifying information differ from each other. Each piece of the specifying information is associated with one divisional encrypted data and indirectly specifies a key used for decrypting the divisional encrypted data associated therewith.

The specifying information generating unit 277 transmits the specifying information to the encryption unit 273. Fundamentally, in this embodiment, the specifying information indicates the order of generation of the solution in the encryption processing apparatus 1. The specifying information generating unit 277 transmits the specifying information used for decrypting the divisional encrypted data which is the first to be decrypted (corresponding to first specifying information in this specification; in this embodiment, information indicating the order of generation of the first generated solution for the encryption of the encrypted data in the encryption processing apparatus 1 corresponds to the first specifying information) not to the encryption unit 273 but exceptionally to the header generating unit 279.

The timing specifying information generating unit 278 generates timing specifying information based on the data received through the interface unit 271, for example, from the input device 25 operated by the user.

The timing specifying information generated by the timing specifying information generating unit 278 specifies timing to prevent the encrypted data containing the timing specifying information from being decrypted. For the timing specifying information, a simple designation of a date and a time, for example, such as X (month), X (day), 200X (year), or X (hour), X (minute), X (month), X (day), 200X (year) is sufficient. The timing specifying information may contain the content for the allowance or inhibition of decryption, such as the inhibition of decryption of the encrypted data containing the timing specifying information after predetermined date and time or the allowance of decryption of the encrypted data containing the timing specifying information before the predetermined date and time.

The timing specifying information generating unit 278 transmits the generated timing specifying information to the header generating unit 279.

The header generating unit 279 generates header data serving as a header of the encrypted data based on the data received through the interface unit 271, for example, from the input device operated by the user.

The header data contains an address of the encryption processing apparatus 1 corresponding to a transmission source of the encrypted data and an address of the decryption processing apparatus 2 corresponding to a destination of the encrypted data. The header data generating unit 279 allows the header data to contain both the first specifying information received from the specifying information generating unit 277 and the timing specifying information received from the timing specifying information generating unit 278.

The header generating unit 279 transmits the generated header data to the connecting unit 280.

The connecting unit 280 has a function of connecting the divisional encrypted data generated by encrypting the divisional plaintext data in the encryption unit 273 to obtain a unit of encrypted data. The connecting unit 280 in this embodiment connects the header data generated by the header generating unit 279 in addition to the divisional encrypted data received from the encryption unit 273 to obtain a unit of the encrypted data.

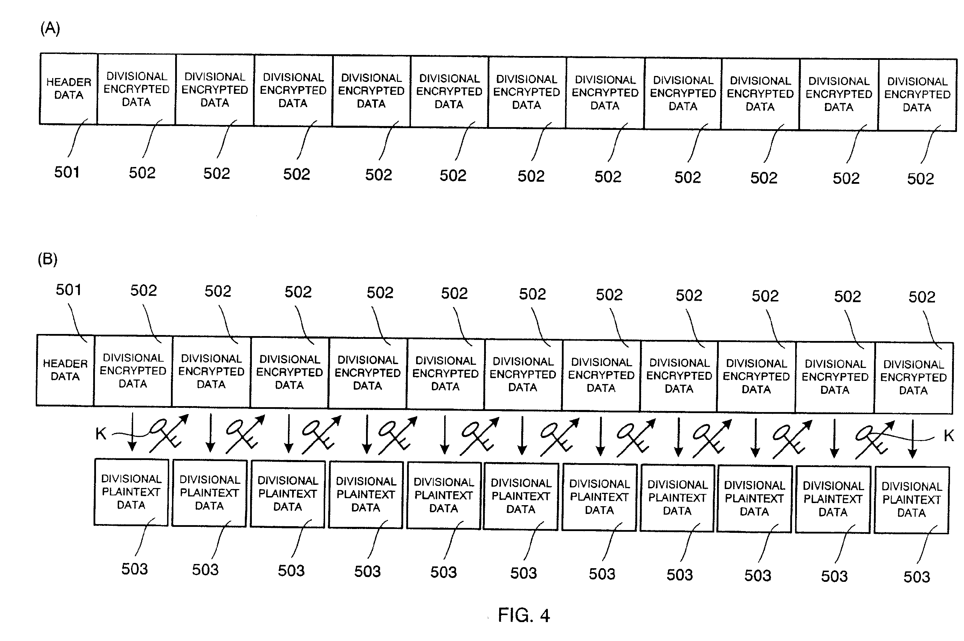

A data structure of the encrypted data is as exemplified in Fig. 4(A). Although an actual number of the divisional encrypted data 502 is much larger than illustrated, the number of the illustrated divisional encrypted data 502 is quite small in Figs. 4(A) and 4(B) for the convenience of illustration.

The encrypted data contains the above-described header data 501 at its head (a left end in Figs. 4(A) and 4 (B) corresponds to the head of the encrypted data), as illustrated in Fig. 4 (A). The multiple divisional encrypted data 502 follow the header data 501. The divisional encrypted data 502, which is decrypted earlier in the decryption of the encrypted data, is situated closer to the head in the encrypted data. In other words, for decryption of the encrypted data, the divisional encrypted data 502 are decrypted in the order of arrangement of the divisional encrypted data 502 from the first divisional encrypted data 502 to the last divisional encrypted data 502.

The encrypted data generated in the connecting unit 280 is transmitted to the interface unit 271 and then to the communication device 28 through the bus 29 and is further transmitted to the decryption processing apparatus 2 through the network N.

Next, the configuration of the decryption processing apparatus 2 will be described.

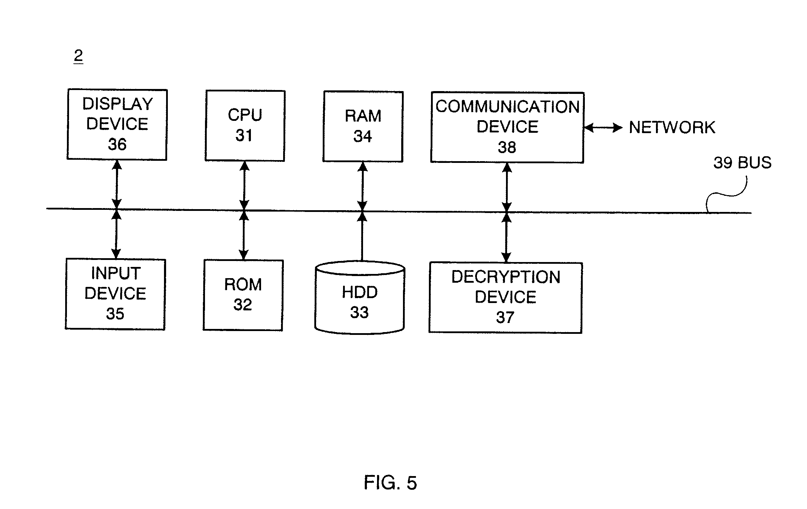

A hardware configuration of the decryption processing apparatus 2 is as illustrated in Fig. 5.

The decryption processing apparatus 2 includes a CPU 31, a ROM 32, an HDD 33, a RAM 34, an input device 35, a display device 36, a decryption device 37, a communication device 38, and a bus 39. The CPU 31, the ROM 32, the HDD 33, the RAM 34, the input device 35, the display device 36, and the bus 39 in the decryption processing apparatus 2 are respectively configured to be the same as the CPU 21, the ROM 22, the HDD 23, the RAM 24, the input device 25, the display device 26 and the bus 29 in the encryption processing apparatus 1 to have the same functions. The HDD 33 in the decryption processing apparatus 2 stores a MAC address of the decryption processing apparatus 2.

Note that the communication device 38 in the decryption processing apparatus 2 can receive the encrypted data transmitted from the encryption processing apparatus 1 through the network N.

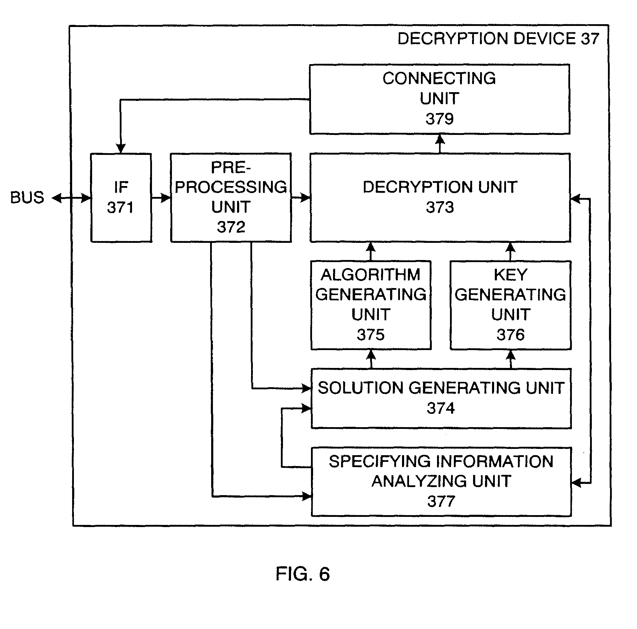

The decryption device 37 decrypts the encrypted data received from the encryption processing apparatus 1 and is configured as illustrated in Fig. 6.

The decryption device 37 includes an interface unit 371, a pre-processing unit 372, a decryption unit 373, asolutiongenerating unit 374, an algorithm generating unit 375, a key generating unit 376, a specifying information analyzing unit 377, and a connecting unit 379.

The interface unit 371 receives the encrypted data from the communication device 38 through the bus 39 and transmits the received encrypted data to the pre-processing unit 372.

On the other hand, the interface unit 371 receives the data to be processed from the connecting unit 379 as described below to transmit the received data to be processed to the bus 39.

When receiving the encrypted data from the bus 39 through the interface unit 371, the pre-processing unit 372 performs the following processing.

The pre-processing unit 372, which has received the encrypted data, first extracts the header data from the received encrypted data and also extracts the first specifying information contained in the header data therefrom to transmit the first specifying information to the specifying information analyzing unit 377.

The pre-processing unit 372 also performs a processing of dividing the encrypted data to obtain the divisional encrypted data. The division is made possible, for example, by the agreement between the encryptionprocessing apparatus 1 and the plurality of decryption processing apparatuses 2 on a length (size) of the divisional encrypted data or by writing a method of dividing the encrypted data to obtain the divisional encrypted data in the header data contained in the encrypted data to thereby divide the encrypted data according to the written information in the pre-processing unit 372. The encrypted data is sequentially divided from the head side to obtain the divisional encrypted data.

The pre-processing unit 372 transmits the divisional encrypted data obtained by dividing the encrypted data to the decryption unit 373.

The decryption unit 373 has a function of decrypting the divisional encrypted data received from the pre-processing unit 372. The details of the decryption will be described below.

Every divisional encrypted data except for the last one contains the specifying information (more precisely, the specifying information is contained in an encrypted form for each piece of divisional plaintext data). The decryption unit 373 has another function of transmitting the specifying information contained in the decrypted data obtained by decrypting the divisional encrypted data to the specifying information analyzing unit 377.

The specifying information analyzing unit 377 analyzes the content indicated by the specifying information (the first specifying information received from the pre-processing unit 372 or the other specifying information received from the decryption unit 373). The specifying information analyzing unit 377 transmits information on the content specified by the specifying information to the solution generating unit 374. Since the specifying information indicates the order of generation of the solution in the encryption processing apparatus 1 in this embodiment, the specifying information analyzing unit 377 transmits the specifying information to the solution generating unit 374.

The solution generating unit 374 sequentially generates the solutions. The solution generated by the solution generating unit 374 is the same as that generated by the solution generating unit 274 in the encryption processing apparatus 1 in the same order. The order of the solution to be generated by the solution generating unit 374 is specified by the information transmitted from the specifying information analyzing unit 377. The generated solution is transmitted to the algorithm generating unit 375 and the key generating unit 376.

The algorithm generating unit 375 generates the algorithm based on the solution received from the solution generating unit 374. The algorithm is used for performing the decryption processing in the decryption unit 373. The algorithm generated by the algorithm generating unit 375 in the decryption processing apparatus 2 is the same as that generated by the algorithm generating unit 275 in the encryption processing apparatus 1 in the same order.

The key generating unit 376 generates the key based on the solution received from the solution generating unit 374. The key is used for performing the decryption processing in the decryption unit 373. The key generated by the key generating unit 376 in the decryption processing apparatus 2 is the same as that generated by the key generating unit 276 in the encryption processing apparatus 1 in the same order.

The function of the connecting unit 379 in the decryption processing apparatus 2 is approximately the same as that of the encryption processing apparatus 1. The connecting unit 379 gathers the divisional plaintext data generated by the decryption of the divisional encrypted data in the decryption unit 373 into a unit to generate the data to be processed. The data to be processed is the same as the original data to be processed, which has been encrypted in the encryption processing apparatus 1. The data to be processed is transmitted through the bus 39 to the exterior of the decryption device 37 (for example, to the HDD 33).

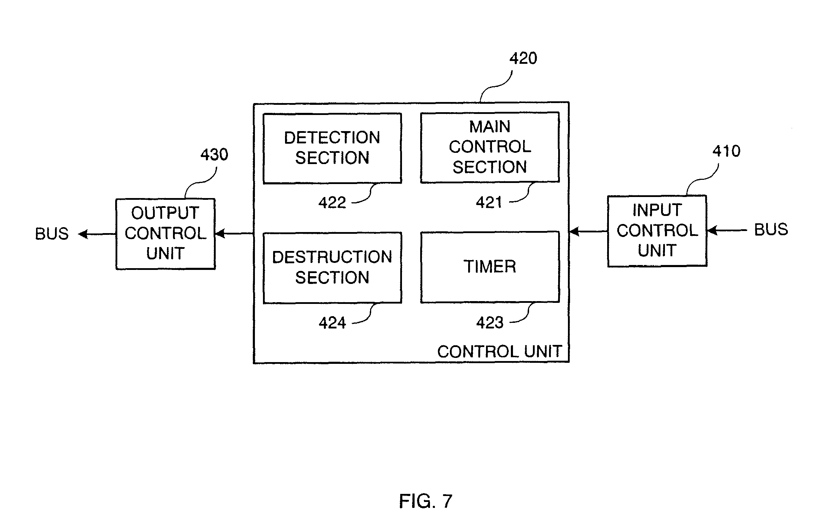

In the decryption processing apparatus 2, the CPU 31 executes the program recorded in the ROM 32 or the HDD 33 to form functional blocks as illustrated in Fig. 7. The functional blocks illustrated in Fig. 7 may be formed only by the above-described program recorded in the ROM 32 or the HDD 33, but may also be formed by the cooperation between the above-described program and another program which is, for example, an OS included in the decryption processing apparatus 2. Moreover, a part of the decryption device 37 described above may be formed by the above-described program.

The functional blocks in the decryption processing apparatus 2, which are formed by the CPU 31, include an input control unit 410, a control unit 420, and an output control unit 430, as illustrated in Fig. 7.

The input control unit 410 has a function of receiving an input from the input device 35 through the bus 39 and analyzing the content of the input to transmit the analyzed content to the control unit 420. The content of the input from the input device 35, which is received by the input control unit 410, will be described blow. The input control unit 410 has another function of receiving the encrypted data through the bus 39 from, for example, the HDD 33 to transmit the received encrypted data to the control unit 420.

The control unit 420 has a main function of turning the encrypted data into "dust" data according to the present invention. The control unit 420 has another function of determining whether or not to turn the encrypted data into "dust" according to the present invention although the control unit 420 does not always perform such a determination for all the encrypted data.

The control unit 420 includes a main control section 421, a detection section 422, a timer 423, and a destruction section 424.

The main control section 421 has a function of determining whether or not to turn the encrypted data into the "dust" according to the present invention. There are three cases as described below, in which the decryption processing apparatus 2 in this embodiment turns the encrypted data into the "dust" data according to the present invention. In any case, the destruction section 424, which has received an instruction of turning the encrypted data into the "dust" data with the main control section 421, turns the encrypted data into the "dust" data by a method as described below. When the main control section 421 does not turn the encrypted data in the present invention into the "dust" data and, in addition, the following condition is satisfied, the main control section 421 generates a notification of allowing the decryption device 37 to decrypt the encrypted data.

As described above, the destruction section 424 has the function of performing the process of turning the encrypted data into the "dust" data. The process is realized by irreversibly converting a part of the encrypted data or writing appropriate data over a part of the encrypted data. For overwriting a part of the encrypted data, the content of the data to be overwritten may be any data content as long as the overwrite causes an irreversible change in a part of the encrypted data and prevents the encrypted data from being decrypted. For example, appropriate data such as data enumeration such as "0" or "1" or alternate "0" and "1" data canbe used. The repetition of the date of overwrite or the repetition of information of a file size of another last updated file can be used as the data for overwriting. The data written over a part of the encrypted data may be changed at appropriate timing. In any of the case where a part of the encrypted data is irreversibly converted and the case where a part of the encrypted data is overwritten, it is necessary to specify a "part" of the encrypted data to be irreversibly converted or overwritten.

It is the detection section 422 that has a function of specifying the "part". The detection section 422 specifies the part of the encrypted data, which is to be irreversibly converted or overwritten, and transmits information of the specified part to the destruction section 424. The part of the encrypted data, which is specified by the detection section 422, is the part whose irreversible conversion or overwrite prevents the encrypted data from being decrypted. In this embodiment, the "part" contains at least one of the first specifying information in the encrypted data and the first divisional encrypted data in the encrypted data. The first specifying information and the first divisional encrypted data may both be converted or overwritten. In such a case, the range allowing both the first specifying information and the first divisional encrypted data to be convertedor overwritten is specified by the detection section 422. When the first specifying information is to be converted or overwritten, the "part" of the encrypted data, which is to be converted or overwritten, is not necessarily required to be the first specifying information and may be an appropriate range containing the first specifying information, which is not such large. When the first divisional encrypted data is to be converted or overwritten, the "part" of the encrypted data to be converted or overwritten is not necessarily required to be the first divisional encrypted data and may be an appropriate range containing the first divisional encrypted data, which is not such large. In any case, the detection section 422 specifies the part of the encrypted data, which is to be converted or overwritten, and notifies the destruction section 424 of the specified part. The destruction section 424, which receives the notification, overwrites or converts the part of the encrypted data, which is specified by the detection section 422. In this embodiment, the detection section 422 specifies the header of the encrypted data containing the first specifying information as the part of the encrypted data, which is to be converted or overwritten, when the first specifying information is converted or overwritten and specifies the first divisional encrypted data itself when the first divisional encrypted data is converted or overwritten.

The timer 423 specifies a date and a time of the timing of overwriting or converting the part of encrypted data. Since a general OS has such a function, the timer 423 may be realized by borrowing the function of an OS.

The output control unit 430 transmits an output from the control unit 420 to an appropriate location through the bus 39. The control unit 420 outputs, for example, the encrypted data in some cases, the "dust" data obtained from the encrypted data in some cases, and the above-described notification for allowing the encryption device 37 to decrypt the encrypted data in other cases. The cases where these outputs are performed and the destination of the outputs will be described below.

Next, a flow of a processing performed in the encryption system will be described.

The flow of the processing performed in the encryption system is as follows.

First, the encryption processing apparatus 1 encrypts the data to be processed to generate the encrypted data.

Subsequently, the encryption processing apparatus 1 transmits the encrypted data to the decryption processing apparatus 2.

Subsequently, the decryption processing apparatus 2, which has received the encrypted data, decrypts the encrypted data according to a requirement of the user of the decryption processing apparatus 2 to obtain the data to be processed. The decryption processing apparatus 2 also turns the encrypted data into the "dust" data according to a requirement of the user of the decryption processing apparatus 2 or at predetermined timing.

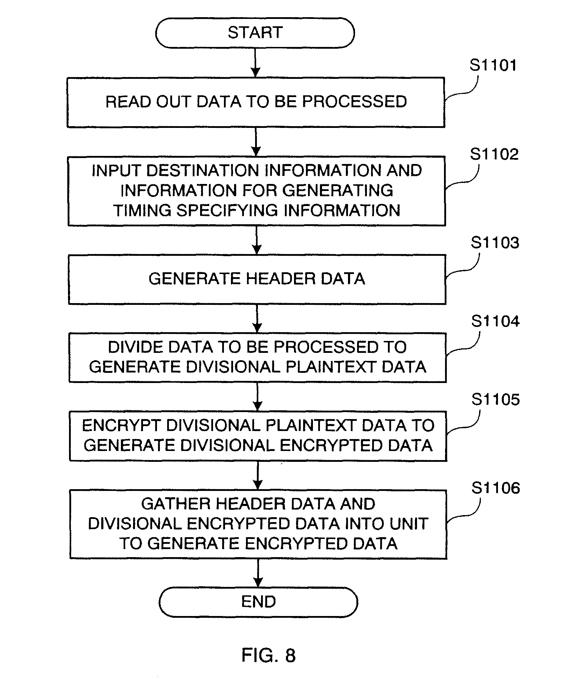

First, the above-described process, in which the encryption processing apparatus 1 encrypts the data to be processed to generate the encrypted data, will be described in detail referring to Fig. 8.

First, the data to be processed is read out (S1101). The data to be processed may be any data as long as it is required to be transmitted from the encryption processing apparatus 1 to the decryption processing apparatus 2. In this embodiment, the data to be processed is recorded in the HDD 23. The data to be processed may be some sort of data which is read from another recording medium such as an external recording medium into the encryption processing apparatus 1.

When a command of transmitting the data to be processed to the decryption processing apparatus 2 is input from, for example, the input device 25, the CPU 21 reads out the data to be processed from the HDD 23 to transmit the read data through the bus 29 to the encryption device 27. More specifically, the data to be processed is transmitted from the bus 29 to the interface unit 271 in the encryption device 27 and then to the pre-processing unit 272.

At almost the same time as the readout of the data to be processed, destination information indicating the decryption processing apparatus 2 corresponding to a destination of the transmission of the encrypted data obtained by encrypting the data to be processed and information which serves to generate the timing specifying information are input from the input device 25 (S1102). The destination information and the information which serves to generate the timing specifying information are transmitted by the CPU 21 through the bus 29 to the encryption device 27. More specifically, the destination information is transmitted through the interface unit 271 to the header generating unit 279, whereas the information which serves to generate the timing specifying information is transmitted through the interface unit 271 to the timing specifying information generating unit 278.

The timing specifying information generating unit 278 generates the timing specifying information based on the received information which serves to generate the timing specifying information. The timing specifying information in this embodiment is a date and a time for specifying a predetermined time instant such as X (hour), X (minute), X (month), X (day), 200X (year).

The timing specifying information generating unit 278 transmits the generated timing specifying information to the header generating unit 279.

The solution generating unit 274 generates the solution in the following method. The generated solution is transmitted from the solution generating unit 274 to both the algorithm generating unit 275 and the key generating unit 276. The solution generating unit 274 also transmits information for specifying the order of generation of the solution in the encryption processing apparatus 1 to the specifying information generating unit 277. The specifying information generating unit 277 transmits the information as the specifying information to either the encryption unit 273 or the header generating unit 279. It is only the specifying information indicating the order of generation of the first generated solution for the encrypted data in the encryption processing apparatus 1 (the first specifying information) that is transmitted to the header generating unit 279.

The solutions used for encrypting the data to be processed in the encryption processing apparatus 1 are not limited to a series of solutions beginning with the first generated solution in the encryption processing apparatus 1. The reason is, for example, as follows. When another data to be processed has previously been encrypted in the encryption processing apparatus 1 to generate a plurality of continuous solutions, a series of solutions following the solutions generated in the previous encryption are used for encrypting the current data to be processed in some cases. Therefore, the specifying information indicating the order of generation of the solution which is used for encrypting the data to be processed in the current encryption is required.

How the solution generating unit 274 generates the solution will be described below.

When the interface unit 271 receives the data to be processed from the bus 29, the solution generating unit 274 receives the information of the reception of the data from the interface unit 271.

Upon reception of the information, the solution generating units 274 starts generating the solution. In this embodiment, the solution generating unit 274 generates a solution each time the data to be processed is received by the interface unit 271. The solution in this embodiment is an 8x8 matrix (X) although the solution is not limited thereto.

The solution generating unit 274 continuously generates the solutions as nonlinearly transiting ones, although not necessarily required. As a result, each of the solutions is a pseudorandom number.

In order to continuously generate the solutions in a nonlinearly transiting manner, for example, (1) the inclusion of a raising calculation of the previous solution in the process of generating the solutions, (2) the inclusion of a multiplication of the previous two or more solutions in the process of generating the solutions, or the combination of (1) and (2) are conceived.

In this embodiment, the solution generating unit 274 has a predetermined 01-th solution ($X_{01}$) and a predetermined 02-th solution ($X_{02}$) as an initial matrix corresponding to initial solutions (for example, the 01-th solution and the 02-th solution are stored in a predetermined memory such as the HDD 2 or the ROM 22). The initial matrix included in the encryption processing apparatus 1 is the same as that included in the decryption processing apparatus 2 as described below.

The solution generating unit 274 assigns the initial matrix to the algorithm for generating solutions stored in the solution generating unit 274 to generate a first solution ($X_1$) as follows.

$$\text{First solution } (X_1) = X_{02}X_{01} + \alpha \ (\alpha = \text{an } 8{\times}8 \text{ matrix})$$

This is the first generated solution.

Next, when the interface unit 271 receives the data to be processed from the bus 29, the solution generating unit 274 generates a second solution ($X_2$) as follows.

$$\text{Second solution } (X_2) = X_1X_{02} + \alpha$$

In a similar manner, each time the interface unit 271 receives the data to be processed from the bus 29, the solution generating unit 274 generates a third solution, a fourth solution, an N-th solution and so forth as follows.

$$\text{Third solution } (X_3) = X_2X_1 + \alpha$$

$$\text{Fourth solution } (X_4) = X_3 X_2 + \alpha$$

$$\text{N-th solution } (X_N) = X_{N-1} X_{N-2} + \alpha$$

The thus generated solutions are transmitted to the algorithm generating unit 275 and the key generating unit 276, and are stored in the solution generating unit 274. In this embodiment, for generating the N-th solution $(X_N)$, the N-1-th solution $(X_{N-1})$ and the N-2-th solution $(X_{N-2})$, in short, the two previously generated solutions are used. Therefore, for generating a new solution, the solution generating unit 274 must store the two previous solutions which are generated immediately before the new solution (or some unit other than the solution generating unit 274 must store the two solutions).

The thus generated solutions become chaotic to nonlinearly transit and are therefore pseudorandom numbers.

The matrix $\alpha$ corresponding to environmental information is not necessarily required to be used for every case where the solution is generated. For example, $\alpha$ may be used for the first solution $(X_1) = X_{02} X_{01} + \alpha$ and for the case where the first solution is used. The second and the subsequent solutions may be obtained by a general formula: N-th solution $(X_N) = X_{N-1} X_{N-2}$.

In order to cause the nonlinear transition, besides the use of the above-described formula:

$$\text{N-th solution } (X_N) = X_{N-1} X_{N-2} \ (+\alpha)$$

the use of the following formulae is conceived.

The parentheses for $\alpha$ mean that $\alpha$ is not necessarily required to obtain the second and the subsequent solutions, which is applied to the following exemplified case.

For example,

$$\text{(a) N-th solution } (X_N) = (X_{N-1})^P$$

$$\text{(b) N-th solution } (X_N) = (X_{N-1})^P (X_{N-2})^Q (X_{N-3})^R (X_{N-4})^S$$

$$\text{(c) N-th solution } (X_N) = (X_{N-1})^P + (X_{N-2})^Q$$

where each of P, Q, R, and S is a predetermined constant. The solution generating unit 274 has one initial matrix when Formula (a) is used, two for the use of Formula (c), and four for the use of Formula (b).

Although the above-described $\alpha$ is a constant, $\alpha$ can also be specific varying environmental information. The environmental information is information spontaneously generated in a sequential manner with elapse of time and can be commonly obtained even at a distant location. The environmental information is, for example, information determined based on the weather in a specific area, information determined based on the content of a television program broadcasted at a specific time from a certain television station, or information determined by the result of a specific sport.

If the above-described $\alpha$ are sequentially created from the environmental information described above to generate common information, the confidentiality of communication can be further enhanced.

It is apparent that $\alpha$ (which may be generated from the environmental information) can be added to the right-hand side of each of the above-described Formulae (a) to (c).

The header generating unit 279, which has received the destination information, the timing specifying information, and the first specifying information, generates the header data (S1103) . The generated header data contains the destination information, the timing specifying information, and the first specifying information.

Although the specifying information in this embodiment indicates the order of generation of the solution of interest as describedabove, the solutionmay serve as the specifying information. In this case, the first specifying information which is the first generated solution is transmitted to the header generating unit 279, whereas the other specific information which are the second and the subsequently generated solution are transmitted to the encryption unit 273. The specific information may also serve as the key. In such a case, the solution generating unit 274 is not required to transmit the solution to the specifying information generating unit 277. Instead, the key generated by the key generating unit 276 is required to be transmitted to the specifying information generating unit 277. When the specifying information is a key, the first specifying information, which is the first generated key, is transmitted to the header generating unit 279, whereas the other specifying information, which are the second and the subsequently generated keys, are transmitted to the encryption unit 273 as in the casewhere the specifying information is a solution.

The header data is transmitted from the header generating unit 279 to the connecting unit 280.

The pre-processing unit 272 divides the data to be processed into the divisional plaintext data, each composed of a predetermined number of bits (S1104).

Although there may be a plurality of methods of generating the divisional plaintext data from the data to be processed (specifically, a data length of the divisional plaintext data may differ for each piece of divisional plaintext data), the data lengths of all the divisional plaintext data are the same (for example, an 8-bit length) in this embodiment. The generated divisional plaintext data are transmitted from the pre-processing unit 272 to the encryption unit 273.

In parallel with the generation of the divisional plaintext data, the algorithm and the solution are generated. The algorithm and the solution are used for encrypting the divisional plaintext data to obtain the divisional encrypted data.

The algorithm is generated by the algorithm generating unit 275.

The algorithm generating unit 275 in this embodiment generates the algorithm based on the solution.

The algorithm generating unit 275 in this embodiment generates the algorithm based on the solution as follows.

The algorithm in this embodiment is defined as "being obtained by raising the 8x8 matrix X corresponding to the solution to the a-th power, rotating the matrix in a clockwise manner by nx90°, and then multiplying the rotated matrix by Y when the 8-bit divisional plaintext data is a 1x8 matrix Y".

Although a is a predetermined constant in some cases, a is a numerical value varying based on the solution in this embodiment. Specifically, the algorithm in this embodiment varies based on the solution. For example, a may be defined as a remainder obtained by dividing the numerical value obtained by adding all the numerical values corresponding to the matrix elements contained in the solution, which is the 8x8 matrix, by 5 (however, a = 1 when the remainder is 0).

The above-described n is the key and is a predetermined numerical value. When the key is a constant value, n is fixed. As described below, the key varies based on the solution. Specifically, in this embodiment, n also varies based on the solution.

It is apparent that the algorithm can be determined in another manner. Moreover, the algorithm may be fixed.

In this embodiment, the algorithm generating unit 275 generates the algorithm for each reception of the solution from the solution generating unit 274 and transmits the generated algorithm to the encryption unit 273.

In parallel with the generation of the divisional plaintext data, the key generating unit 276 generates the key used for encrypting the divisional plaintext data.

The key generating unit 276 generates the key based on the solution.

In this embodiment, the key generating unit 276 generates the key as follows.

The key in this embodiment corresponds to a numerical value obtained by adding all the values corresponding to the elements of the matrix contained in the solution which is the 8x8 matrix. Therefore, the key varies based on the solution in this embodiment.

The key can also be determined in another manner.

In this embodiment, for each reception of the solution from the solution generating unit 274, the key generating unit 276 generates the key and transmits the generated key to the encryption unit 273.

The encryption unit 273 encrypts the divisional plaintext data received from the pre-processing unit 272 based on the algorithm received from the algorithm generating unit 275 and the key received from the key generating unit 276 (S1105).

Asdescribedabove, thealgorithmisdefinedas "being obtained by raising the 8x8 matrix X corresponding to the solution to the a-th power, rotating the matrix in a clockwise manner by $n \times 90°$ and then multiplying the rotated matrix by Y when the 8-bit divisional plaintext data is a $1 \times 8$ matrix Y", and n corresponding to the key is a numerical value as described above.

For example, when a is 3 and n is 6, the 8x8 matrix, which is obtained by rotating another 8x8 matrix obtained by raising X to the third power by $6 \times 90° = 540°$ in a clockwise manner, is multiplied by the divisional plaintext data to perform the encryption.

The thus generated data is the divisional encrypted data.

For encrypting the second and the subsequent divisional plaintext data, the encryption unit 273 mixes the solution received from the solution generating unit 274 into the divisional plaintext data and then encrypts the divisional plaintext data to obtain the divisional encrypted data.

In this embodiment, the steps in S1104 and S1105 are repeated until the entire data to be processed is encrypted to be the divisional encrypted data.

The divisional encrypted data are transmitted to the connecting unit 280. The connecting unit 280 connects the header data 501 and the divisional encrypted data 502 into a unit having the structure as illustrated in Fig. 4 (A) and generates the encrypted data (S1106) . The order of arrangement of the divisional encrypted data corresponds to that of the original divisional plaintext data.

In the manner as described above, the process, in which the encryption processing apparatus 1 encrypts the data to be processed to generate the encrypted data, is first terminated.

The thus generated encrypted data is transmitted through the bus 29 to the communication device 28 in the encryption processing apparatus 1.

The communication device 28 transmits the encrypted data to the decryption processing apparatus 2 designated by the MAC address contained in the header data of the encrypted data through the network N.

The encrypted data transmitted to the decryption processing apparatus 2 is received by the communication device 38 in the decryption processing apparatus 2. The encrypted data is transmitted to the HDD 33 through the bus 39 to be recorded therein.

A processing of decrypting the encrypted data, which can be executed in the decryption processing apparatus 2 receiving the encrypted data, will now be described.

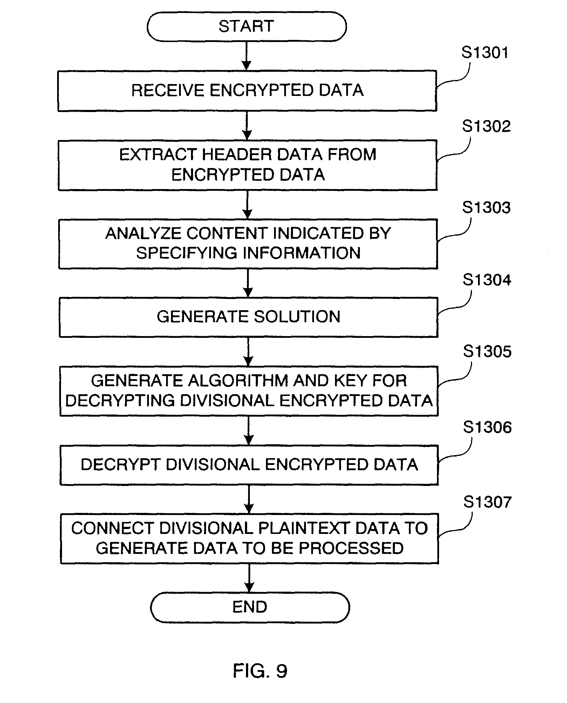

Hereinafter, for the decryption process, a processing of decrypting the encrypted data back into the data to be processed will be described in detail referring to Fig. 9.

When the user operates the input device 35 of the decryption processing apparatus 2 to input an instruction of decrypting the encrypted data (S1301), the instruction is transmitted to the CPU 31. Based on the instruction, the CPU 31 transmits the encrypted data to the decryption device 37.

The encrypted data is received by the pre-processing unit 372 in the decryption device 37 through the interface unit 371.

Then, the pre-processing unit 372 extracts the header data from the received encrypted data (S1302) and further extracts the first specifying information from the header data to transmit the extracted first specifying information to the specifying information analyzing unit 377.

The specifying information analyzing unit 377, which has received the first specifying information, specifies the order of generation of the solution, which is to be used for decrypting the first divisional encrypted data, in the encryption processing apparatus 1 (S1303). Then, the specifying information analyzing unit 377 transmits the specified information to the solution generating unit 374.

The solution generating unit 374 generates the solution for decrypting the divisional encrypted data based on the information (S1304).

The solution is generated in the solution generating unit 374 in the decryption device 37 of the decryptionprocessing apparatus 2 through the same process as that performed in the solution generating unit 274 in the encryption processing apparatus 1.

As described above, the solution generating unit 374 has the same initial matrix and algorithm for generating the solutions as those stored in the solution generating unit 274 of the encryption processing apparatus 1 associated with the decryption device 37 including the solution generating unit 374. Therefore, when the solution generated in the decryption device 37 of the decryption processing apparatus 2 is compared with the solution generated in the encryption device 27 of the encryption processing apparatus 1 in the same order, the solutions are the same. The order of the solution to be generated is determined by the specifying information.

The generated solution is transmitted from the solution generating unit 374 to the algorithm generating unit 375 and the key generating unit 376.

The algorithm generating unit 375 and the key generating unit 376 respectively generate the algorithm and the key for decrypting the divisional encrypted data (S1305).

The algorithm generating unit 375 generates the algorithm based on the received information. The process, in which the algorithm generating unit 375 of the decryption processing apparatus 2 generates the algorithm, is the same as the process in which the algorithm generating unit 275 of the encryption processing apparatus 1 generates the algorithm. The algorithm generated by the algorithm generating unit 375 based on the same solution is always the same as that generated in the algorithm generating unit 275 of the encryption processing apparatus 1.

On the other hand, the key generating unit 376 generates the key based on the received information. The process in which the key generating unit 376 of the decryption processing apparatus 2 generates the key is the same as that in which the key generating unit 276 of the encryption processing apparatus 1 generates the key. The key generated by the key generating unit 376 based on the same solution is always the same as that generated by the key generating unit 276 of the encryption processing apparatus 1.

The decryption processing apparatus 2 generates the same solution as that generated in the encryption processing apparatus 1 based on the information indicating the order of generation of the solution used for encrypting the specifying information in the encryption processing apparatus 1 and then generates the algorithm and the key based on the generated solution. Therefore, the decryption processing apparatus 2 can generate the same algorithm and key as those used for encrypting the specifying information in the encryption processing apparatus 1.

The generated algorithm is transmitted from the algorithm generating unit 375 to the decryption unit 373. The generated key is transmitted from the key generating unit 376 to the decryption unit 373.

Next, by using the algorithm and the key respectively received from the algorithm generating unit 375 and the key generating unit 376, the decryption unit 373 decrypts the divisional encrypted data (S1306) .

More specifically, the decryption unit 373 generates the algorithm for performing the decryption processing (the definition "when the divisional encrypted data is regarded as a 1x8 matrix Z, the divisional plaintext data is obtained by raising the 8x8 matrix X to the a-th power, rotating the obtained matrix by n×90° in a clockwise manner, and then multiplying an inverse matrix of the rotated matrix by Z" ) based on the algorithm received from the algorithm generating unit 375 (the definition "the divisional encrypted data is obtained by raising the 8x8 matrix X corresponding to the solution to the a-th power, rotating the matrix in a clockwise manner by n×90°, and then multiplying the rotated matrix by Y when the 8-bit encrypted plaintext data is the 1×8 matrix Y" and uses the key to perform a calculation according to the above-described definition to perform the decryption processing.

In the above-described manner, the decryption unit 373 decrypts the divisional encrypted data transmitted from the pre-processing unit 372 to generate the divisional plaintext data.

The decryption unit 373 transmits the decrypted divisional plaintext data to the connecting unit 379.

The decryption unit 373 also extracts the specifying information data contained in the divisional plaintext data to transmit the extracted specifying information data to the specifying information analyzing unit 377. The specifying information analyzing unit 377 transmits the content of the specifying information to the solution generating unit 374. The solution generating unit 374 generates the solution based on the transmitted information to transmit the generated solution to the algorithm generating unit 375 and the key generating unit 376. The algorithm generating unit 375 and the key generating unit 376, which have received the solution, transmit the solution to the decryption unit 373. Then, the decryption unit 373 decrypts the second divisional encrypted data to generate the second divisional plaintext data. Specifically, the decryption device 37 repeats the above-described steps in S1303 to S1306 until all the divisional encrypted data are decrypted.

As described above, the decryption processing apparatus 2 in this embodiment uses the specifying information, which is extracted by decrypting the divisional encrypted data, to decrypt the subsequent divisional encrypted data. Fig. 4 (B) schematically illustrates a state of the decryption. Fig. 4(B) illustrates the divisional plaintext data denoted by the reference numeral 503 and the specifying information in a key-like form denoted by K.

Next, the decrypted divisional plaintext data is transmitted to the connecting unit 379. The connecting unit 379 connects the received divisional plaintext data into a unit to obtain the data to be processed (S1307).

In this manner, the decryption processing apparatus 2 can decrypt the encrypted data back into the data to be processed.

The generated data to be processed is transmitted from the connecting unit 379 to the interface unit 371 and then through the bus 39 to, for example, the HDD 33. The data to be processed is appropriately used in the decryption processing apparatus 2.

In the above-described example, the specifying information indicates the order of generation of the solution, which is used for encrypting the divisional encrypted data, in the encryption processing apparatus 1. However, the specifying information is not limited thereto.

For example, the specifying information may be the solution itself. In this case, the decryption device 37 does not need the solution generating unit 374. In this case, it is sufficient that the specifying information analyzing unit 377 of the decryption device 37 transmits the solution specified by the specifying information analyzing unit 377 to the algorithm generating unit 375 and the key generating unit 376.

Alternatively, the specifying information may be the key itself. In this case, the decryption device 37 does not need the solution generating unit 374 or the key generating unit 376. In this case, it is sufficient that the specifying information analyzing unit 377 of the decryption device 37 transmits the key specified by the specifying information analyzing unit 377 to the decryption unit 373. In such a case, the algorithm used for the encryption or the decryption is fixed between the encryption processing apparatus 1 and the decryption processing apparatus 2.

Next, a processing of turning the encrypted data into the "dust" data, which is performed in the decryption processing apparatus 2, will be described.

The encrypted data is turned into the "dust" data in the decryption processing apparatus 2 in the following three cases.

[Case 1]

In Case 1, the encrypted data is turned into the "dust" data based on the user's intension.

When the user inputs a command of turning the encrypted data into the "dust" data through the input device 35 (for example, the user drags an icon associated with the encrypted data and drops the icon over another icon associated with a program of turning the encrypted data into the "dust" data), the encrypted data is turned into the "dust" data.

Upon input of the command, the content of the command is transmitted through the bus 39 to the input control unit 410. The input control unit 410 analyzes and transmits the content to the main control section 421 of the control unit 420.

The main control section 421, which has received the content, determines to turn the encrypted data into the "dust" according to the present invention to read out the encrypted data specified by the command from, for example, the HDD 33. The encrypted data is read through the bus 39 and the input control unit 410. The main control section 421 also transmits an instruction of executing theprocessingof turning the encrypteddata into the "dust" according to the present invention to the destruction section 424. On the other hand, the main control section 421 transmits an instruction of specifying a part to be destroyed in the encrypted data to the detection section 422.

The detection section 422 specifies the part to be destroyed in the encrypted data. Since the part to be destroyed in the encrypted data in this embodiment is the header data or the first divisional encrypted data contained in the encrypted data, the detection section 422 specifies an area of the header data or the first divisional encrypted data in the encrypted data.

The detection section 422 notifies the destruction section 424 of the detected area.

The destruction section 424, which has received the above-described instruction from the main control section 421 and the above-described notification from the detection section 422, executes the processing of turning the encrypted data into the "dust". The processing is executed by irreversibly converting the area specified by the detection section 422 or writing appropriate data irrelevant to the encrypted data over the specified area. The encrypted data, which is subjected to such a processing, can no longer be decrypted.

The main control section 421 transmits the encrypted data, which is subj ected to the above-described processing to be prevented from being decrypted, to an appropriate location where the encrypted data is to be recorded, for example, to the HDD 33, through the output control unit 430 and the bus 39. The encrypted data, which can no longer be decrypted, is recorded in the HDD 33.

Note that Case 1 can be executed even if the encrypted data does not contain the timing specifying information.

[Case 2]

In Case 2, the encrypted data is automatically turned into the "dust" data at predetermined timing.

As described above, the encrypted data in this embodiment contains the timing specifying information. The main control section 421, which executes Case 2, has a function of constantly monitoring whether or not the encrypted data is present in the decryption processing apparatus 2 and reading the timing specifying information contained in the encrypted data when the encrypted data is present. In order to execute the function, the main control section 421 constantly or periodically searches through the decryption processing apparatus 2 to monitor the presence of the encrypted data.

Upon detection of the encrypted data containing the timing specifying information in the decryption processing apparatus 2, the main control section 421 as descried above, for example, constantly monitors whether or not the timing specified by the timing specifying information has come. The monitoring can be performed for each of the encrypted data when a plurality of encrypted data is present in the decryption processing apparatus 2. In order to execute such monitoring, the main control section 421 constantly obtains the information about the current date and time from the timer 423.

When the main control section 421 detects that the timing specified by the timing specifying information contained in a piece of encrypted data has come, the main control section 421 determines to turn the encrypted data containing the timing specifying information into the "dust" data.

The content of the processing performed after such a determination of the main control section 421 is the same as that in Case 1 performed after the determination as described above.

[Case 3]

Case 3 corresponds to an intermediate case between Case 1 and Case 2.

As described above, the encrypted data in this embodiment contains the timing specifying information.

Case 3 is executed when the user inputs a command for decrypting the encrypted data to the input device 35 and the following condition is satisfied.

When the user inputs the command for decrypting the encrypted data, the input is transmitted through the input control unit 410 to the main control section 421.

The main control section 421, which has received the input, has the function of reading out the timing specifying information contained in the encrypted data specified by the command. The main control section 421 determines whether or not the timing specified by the timing specifying information contained in the encrypted data has come based on the comparison with the current date and time read out from the timer 423.

If the timing specified by the timing specifying information contained in the encrypted data has not come yet, the main control section 421 allows the decryption device 37 to decrypt the encrypted data. With such an allowance, the decryption device 37 performs the processing as described above to decrypt the encrypted data.

If the timing specified by the timing specifying information contained in the encrypted data has come, the main control section 421 determines to turn the encrypted data into the "dust" data.

The content of the processing performed after such a determination of the main control section 421 is the same as that in Case 1 after the determination as described above.

<Variation>

A variation of the encryption system in the first embodiment will be described.

Abasic configuration of the encryption system in the variation is fundamentally the same as that of the encryption system in the first embodiment. The encryption system according to the variation differs from the above-described encryption system in a part of the configuration of the encryption device 27 in the encryption processing apparatus 1 and a part of the configuration of the decryption device 37 in the decryption processing apparatus 2.

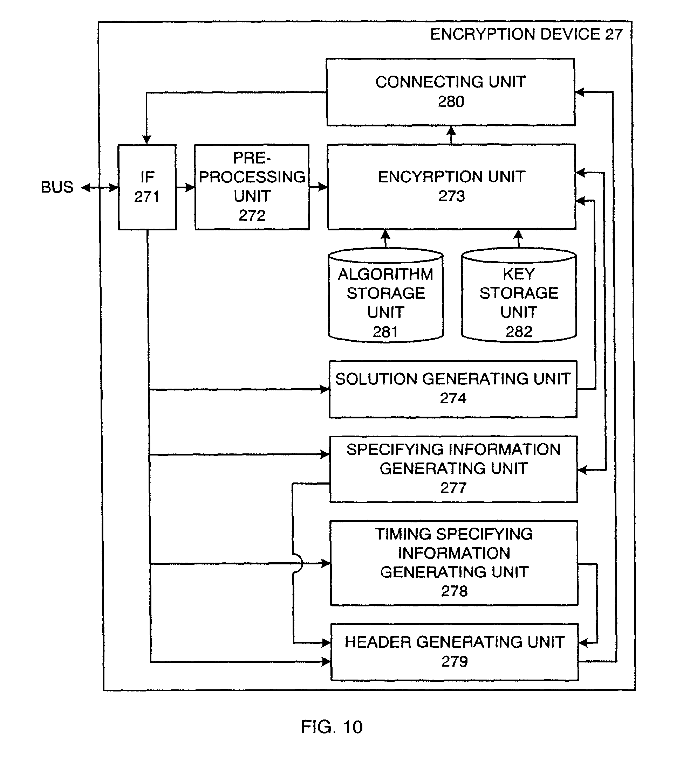

The encryption device 27 in the encryption processing apparatus 1 according to the variation is configured as illustrated in Fig. 10.

The encryption device 27 included in the encryption processing apparatus 1 in the variation differs from that in the first embodiment
in that the algorithm generating unit 275 and the key generating unit 276 are replaced by an algorithm storage unit 281 and a key storage unit 282, as illustrated in Fig. 10.

The algorithm storage unit 281 stores a plurality of algorithms, whereas the key storage unit 282 stores a plurality of keys. The algorithm is used for encrypting the divisional plaintext data in the encryption unit 273, whereas the key is used for encrypting the divisional plaintext data in the encryption unit 273.

In the first embodiment, the algorithms and the keys are continuously generated from the algorithm generating unit 275 and the key generating unit 276 based on the solutions generated by the solution generating unit 274. In this variation, however, the plurality of algorithms and the plurality of keys are prepared and stored in the algorithm storage unit 281 and the key storage unit 282 as the algorithm and the key used for encrypting the divisional plaintext data, respectively. Specifically, in this variation, the plurality of algorithms or keys is prepared in advance. As a result, the plurality of algorithms and keys are used for encrypting the divisional plaintext data without generating new algorithms or keys.

For each encryption of the divisional encrypted data, appropriate algorithm and key are selected from the plurality of algorithms recorded in the algorithm storage unit 281 and the pluralityof keys recorded in the key storage unit 282. The selection of the algorithm and the key from the plurality of algorithms and keys, which are used for encrypting each of the divisional encrypted data, may be appropriately determined.

In this variation, the algorithm and the key are selected by using the solution in the following manner.

In this variation, each time the encryption unit 273 encrypts the divisional plaintext data to obtain the divisional encrypted data, the solution generated as a pseudorandom number is transmitted from the solution generating unit 274 to the encryption unit 273 prior to the encryption. The encryption unit 273 uses the transmitted solution to select one algorithm from the plurality of algorithms recorded in the algorithm storage unit 281 and also one key from the plurality of keys recorded in the key storage unit 282, to thereby encrypt the divisional plaintext data by using the selected algorithm and key. The algorithm and the key are selected by using the solution, for example, in the following manner.

In this variation, each of the plurality of algorithms recorded in the algorithm storage unit 281 has an algorithm identifier which is a continuous number. Similarly, each of the plurality of keys recorded in the key storage unit 282 has a key identifier which is a continuous number. For example, when three algorithms are stored in the algorithm storage unit 281, the algorithm identifiers 0, 1, and 2 are imparted to the algorithms in a one-by-one manner. Similarly, when three keys are recorded in the key storage unit 282, the key identifiers 0, 1, and 2 are imparted to the keys in a one-by-one manner. In this embodiment, the sum of all the elements (numerical values) of the solution generated as the 8x8 matrix as in the first embodiment is divided by 3. The encryption unit 273 selects the algorithm and the key associated with the algorithm identifier or the key identifier which is identical with the reminder of the division.

In this variation, the encryption unit 273 transmits the algorithm identifier imparted to the algorithm or the key identifier imparted to the key used for encrypting the encrypted data to the specifying information generating unit 277. The specifying information generating unit 277 uses the transmitted identifier as the specifying information. As in the first embodiment, the specifying information generating unit 277 transmits the first specifying information to the header generating unit 279 and the other specifying information to the encryption unit 273.

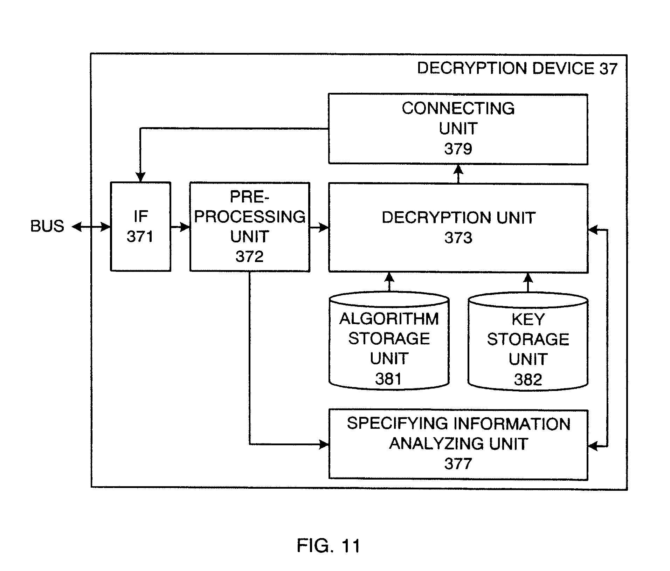

The decryption device 37 in the decryption processing apparatus 2 according to the variation is configured as illustrated in Fig. 11.

The decryption device 37 is approximately the same as that in the first embodiment, but differs from the decryption device 37 in the first embodiment in that the algorithm generating unit 375 and the key generating unit 376 are replaced by an algorithm storage unit 381 and a key storage unit 382. This change corresponds to the above-described change in the encryption device 27.

Since it is not necessary to generate the solution in the decryption device 37 in this variation as described below, the solution generating unit 374 is omitted in contrast to the first embodiment.

The algorithm storage unit 381 and the key storage unit 382, including the contents of the algorithms and the keys stored therein, are the same as the algorithm storage unit 281 and the key storage unit 282 in the encryption device 27. The algorithm storage unit 381 stores a plurality of algorithms, whereas the key storage unit 382 stores a plurality of keys. The multiple algorithms recorded in the algorithm storage unit 381 are imparted with algorithm identifiers which are continuous numerical numbers, respectively. Similarly, the multiple keys recorded in the key storage unit 382 are imparted with key identifiers which are continuous numerical numbers, respectively.

The algorithm is used for decrypting the divisional encrypted data in the decryption unit 373 , whereas the key is used for decrypting the divisional encrypted data in the decryption unit 373.

In contrast to the first embodiment, the algorithms and the keys are not continuously generated in this variation. Instead, the plurality of algorithms recorded in the algorithm storage unit 381 and the plurality of keys recorded in the key storage unit 382 are used for the decryption.

In the variation, upon reception of the first specifying information read from the header data from the pre-processing unit 372, the specifying information analyzing unit 377 included in the decryption device 37 transmits the algorithm identifier and the key identifier indicated by the first identifying information to the decryption unit 373. The decryption unit 373, which has received the algorithm identifier and the key identifier, reads out the algorithm associated with the received algorithm identifier and the key associatedwi th the received key identifier from the algorithm storage unit 381 and the key storage unit 382, respectively, to decrypt the divisional encrypted data by using the read algorithm and key. In this manner, the algorithm and the key read respectively from the algorithm storage unit 381 and the key storage unit 382 are the same as those used for encrypting the divisional encrypted data in the encryption processing apparatus 1.

As in the first embodiment, the specifying information contained in the divisional encrypted data is transmitted from the decryption unit 373 to the specifying information analyzing unit 377 when the divisional encrypted data is decrypted, and the content of the specifying information is transmitted from the specifying information analyzing unit 377 to the decryption unit 373 to be used for the subsequent decryption of the divisional encrypted data.

**Claims**

1. An information processing apparatus for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each piece of the divisional encrypted data except for the divisional encrypteddata to be last decrypted containing specifying information for specifying a key for decrypting the divisional encrypted data to be next decrypted to enable the decryption, the information processing apparatus comprising:

   recording means for recording the encrypted data;
   destruction trigger input means for inputting destruction trigger information for starting a processing of preventing the encrypted data from being decrypted;
   detection means for detecting first divisional encrypted data corresponding to the divisional encrypted data which is the divisional encrypted data to be first decrypted in all the divisional encrypted data from the encrypted data; and
   processing means for receiving an input of the destruction trigger information upon input thereof to cause an irreversible change in the first divisional encrypted data detected by the detection means in the encrypted data recorded in the recording means.

2. An information processing apparatus for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each piece of the divisional encrypted data except for the divisional encrypted data to be last decrypted containing specifying information for specifying a key for decrypting the divisional encrypted data to be next decrypted to enable the decryption, the encrypted data containing first specifying information for specifying the key for decrypting the divisional encrypted data to be first decrypted, the information processing apparatus comprising:

recording means for recording the encrypted data;
destruction trigger input means for inputting destruction trigger information for starting a processing of preventing the encrypted data from being decrypted;
detection means for detecting the first specifying information contained in the encrypted data or first divisional encrypted data corresponding to the divisional encrypted data which is the divisional encrypted data to be first decrypted from the encrypted data; and
processing means for receiving an input of the destruction trigger information upon input thereof to cause an irreversible change in the first specifying information or the first divisional encrypted data, which is detected by the detection means, in the encrypted data recorded in the recording means.

**3.** An information processing apparatus for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each piece of the divisional encrypted data except for the divisional encrypted data to be last decrypted containing specifying information for specifying a key for decrypting the divisional encrypted data to be next decrypted to enable the decryption, the encrypted data containing timing specifying information for specifying timing toprevent the encrypted data frombeing decrypted, the information processing apparatus comprising:

recording means for recording the encrypted data;
timing specifying information reading means for reading out the timing specifying information from the encrypted data;
detection means for detecting first divisional encrypted data corresponding to the divisional encrypted data to be first decrypted in all the divisional encrypted data from the encrypted data; and
processing means for monitoring whether or not the timing specified by the timing specifying information read by the timing specifying information reading means has come and causing an irreversible change in the first divisional encrypted data detected by the detection means if the timing has come.

**4.** An information processing apparatus for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each piece of the divisional encrypted data except for the divisional encrypted data to be last decrypted containing specifying information for specifying a key for decrypting the divisional encrypted data to be next decrypted to enable the decryption, the encrypted data containing first specifying information for specifying the key for decrypting the divisional encrypted data which is the divisional encrypted data to be first decrypted and timing specifying information for specifying timing to prevent the encrypted data from being decrypted, the information processing apparatus comprising:

recording means for recording the encrypted data;
timing specifying information reading means for reading out the timing specifying information from the encrypted data;
detection means for detecting the first specifying information contained in the encrypted data or first divisional encrypted data corresponding to the divisional encrypted data which is the first to be decrypted in all the divisional encrypted data from the encrypted data; and
processing means for monitoring whether or not the timing specified by the timing specifying information read by the timing specifying information reading means has come and causing an irreversible change in the first specifying information or the first divisional encrypted data, which is detected by the detection means, if the timing has come.

5. An information processing apparatus for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each piece of the divisional encrypted data except for the divisional encrypted data to be last decrypted containing specifying information for specifying a key for decrypting the divisional encrypted data to be next decrypted to enable the decryption, the encrypted data containing timing specifying information for specifying timing to prevent the encrypteddata frombeing decrypted, the information processing apparatus comprising:

recording means for recording the encrypted data;
decryption means capable of decrypting the encrypted data;
decryption trigger input means for inputting decryption trigger information for starting the decryption of the encrypted data;
timing specifying information reading means for reading out the timing specifying information from the encrypted data when the decryption trigger information is input from the decryption trigger input means;
detection means for detecting first divisional encrypted data which is the divisional encrypted data to be first decrypted in all the divisional encrypted data from the encrypted data; and
processing means for receiving the timing specifying information read by the timing specifying information reading means upon input of the decryption trigger information to determine whether or not the timing specified by the timing specifying information has come and allowing the decryption means to decrypt the encrypted data if the timing has not come yet while causing an irreversible change in the first divisional encrypted data detected by the detection means if the timing has come.

6. An information processing apparatus for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each piece of the divisional encrypted data except for the divisional encrypted data to be last decrypted containing specifying information for specifying a key for decrypting the divisional encrypted data to be next decrypted to enable the decryption, the encrypted data containing first specifying information for specifying the key for decrypting the divisional encrypted data which is the divisional encrypted data to be first decrypted and timing specifying information for specifying timing to prevent the encrypted data from being decrypted, the information processing apparatus comprising:

recording means for recording the encrypted data;
decryption means capable of decrypting the encrypted data;
decryption trigger input means for inputting decryption trigger information for starting the decryption of the encrypted data;
timing specifying information reading means for reading out the timing specifying information from the encrypted data when the decryption trigger information is input from the decryption trigger input means;
detection means for detecting the first specifying information contained in the encrypted data or first divisional encrypted data which is the first to be decrypted in all the divisional encrypted data; and
processing means for receiving the timing specifying information read by the timing specifying information reading means upon input of the decryption trigger information to determine whether or not the timing specified by the timing specifying information has come and allowing the decryption means to decrypt the encrypted data if the timing has not come yet while causing an irreversible change in the first specifying information or the first divisional encrypted data, which is detected by the detection means, if the timing has come.

7. An information processing apparatus according to any one of Claims 1 to 6, wherein the processing means writes appropriate data over the first specifying information or the first divisional encrypted data to cause the irreversible change in the first specifying information or the first divisional encrypted data.

8. An information processing apparatus according to any one of Claims 1 to 6, wherein the processing means irreversibly converts the first specifying information and the first divisional encrypted data to cause the irreversible change in the first specifying information or the first divisional encrypted data.

9.  An information processing method executed in an information processing apparatus comprising recording means, destruction trigger input means, and processing means, for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each piece of the divisional encrypted data except for the divisional encrypted data to be last decrypted containing specifying information for specifying a key for decrypting the divisional encrypted data to be next decrypted to enable the decryption, the information processing method comprising the steps, executed by the processing means, of:

> recording the encrypted data in the recording means;
> receiving destruction trigger information for starting a processing of preventing the encrypted data from being decrypted from the destruction trigger input means;
> detecting first divisional encrypted data which is divisional encrypted data to be first decrypted in all the divisional encrypted data from the encrypted data; and
> causing an irreversible change in the first divisional encrypted data detected in the step of detecting in the encrypted data recorded in the recording means when the destruction trigger information is received.

10. An information processing method executed in an information processing apparatus comprising recording means, destruction trigger input means, and processing means, for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each of the divisional encrypted data except for the divisional encrypted data to be last decrypted containing specifying information for specifying a key for decrypting the next divisional encrypted data to be next decrypted to enable the decryption, the encrypted data containing first specifying information for specifying the key for decrypting the divisional encrypted data which is the divisional encrypted data to be first decrypted, the information processing method comprising the steps, executed by the processing means, of:

> recording the encrypted data in the recording means;
> receiving destruction trigger information for starting a processing of preventing the encrypted data from being decrypted from the destruction trigger input means;
> detecting the first specifying information contained in the encrypted data or first divisional encrypted data which is the first to be decrypted in all the divisional encrypted data from the encrypted data; and
> causing an irreversible change in the first specifying information or the first divisional encrypteddata, which is detected in the step of detecting, in the encrypted data recorded in the recording means when the destruction trigger information is received.

11. An information processing method executed in an information processing apparatus comprising recording means and processing means, for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, eachpiece of the divisional encrypted data except for the divisional encrypted data to be last decrypted containing specifying information for specifying a key for decrypting the divisional encrypted data to be next decrypted to enable the decryption, the encrypted data containing timing specifying information for specifying timing to prevent the encrypted data from being decrypted, the information processing method comprising the steps, executed by the processing means, of:

> recording the encrypted data in the recording means;
> reading the timing specifying information from the encrypted data;
> detecting first divisional encrypted data which is divisional encrypted data to be first decrypted in all the divisional encrypted data from the encrypted data; and
> monitoring whether or not the timing specified by the timing specifying information read in the step of reading has come and causing an irreversible change in the first divisional encrypted data detected in the step of detecting if the timing has come.

12. An information processing method executed in an information processing apparatus comprising recording means and processing means, for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each piece of the divisional encrypted data except for the divisional encrypted data to be last decrypted containing specifying information for specifying a key for decrypting the divisional encrypted data to be next decrypted to enable the decryption, the encrypted data containing first specifying information for specifying the key for decrypting the divisional encrypted data which is the divisional encrypted data to be first decrypted and timing specifying information for specifying timing to prevent the encrypted data from being decrypted, the information processing method comprising the steps, executed by the processing means, of:

recording the encrypted data in the recording means;
reading the timing specifying information from the encrypted data;
detecting the first specifying information contained in the encrypted data or first divisional encrypted data which is the first to be decrypted in all the divisional encrypted data from the encrypted data; and
monitoring whether or not the timing specified by the timing specifying information read in the step of reading has come and causing an irreversible change in the first specifying information or the first divisional encrypted data, which is detected in the step of detecting, if the timing has come.

13. An information processing method executed in an information processing apparatus comprising recording means, decryption trigger input means, and processing means, for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each piece of the divisional encrypted data except for the divisional encrypted data to be last decrypted containing specifying information for specifying a key for decrypting the next divisional encrypted data to be next decrypted to enable the decryption, the encrypted data containing timing specifying information for specifying timing to prevent the encrypted data from being decrypted, the information processing method comprising the steps, executed by the processing means, of:

recording the encrypted data in the recording means;
receiving decryption trigger information for starting the decryption of the encrypted data from the decryption trigger input means;
reading the timing specifying information from the encrypted data when the step of receiving occurs;
detecting first divisional encrypted data which is divisional encrypted data to be first decrypted in all the divisional encrypted data from the encrypted data; and
receiving the timing specifying information read in the step of reading when the step of receiving occurs to determine whether or not the timing specified by the timing specifying information has come and decrypting the encrypted data if the timing has not come yet while causing an irreversible change in the first divisional encrypted data detected in the step of detecting if the timing has come.

14. An information processing method executed in an information processing apparatus comprising recording means, decryption trigger input means, and processing means, for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each piece of the divisional encrypted data except for the divisional encrypted data to be next decrypted to enable the decryption, the encrypted data containing first specifying information for specifying the key for decrypting the divisional encrypted data which is the divisional encrypted data to be first decrypted and timing specifying information for specifying timing to prevent the encrypted data from being decrypted, the information processing method comprising the steps, executed by the processing means, of:

recording the encrypted data in the recording means;

receiving decryption trigger information for starting the decryption of the encrypted data from the decryption trigger input means;

reading the timing specifying information from the encrypted data when the step of receiving occurs;

detecting the first specifying information contained in the encrypted data or first divisional encrypted data which is the first to be decrypted in all the divisional encrypted data from the encrypted data; and

receiving the timing specifying information read in the step of reading when the step of receiving occurs to determine whether or not the timing specified by the timing specifying information has come and decrypting the encrypted data if the timing has not come yet while causing an irreversible change in the first specifying information or the first divisional encrypteddata, which is detected in the step of detecting, if the timing has come.

15. A computer program for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, eachpiece of the divisional encrypted data except for the divisional encrypted data to be last decrypted containing specifying information for specifying a key for decrypting the divisional encrypted data to be next decrypted to enable the decryption, the computer program being for causing a computer included in an information processing apparatus comprising recording means, destruction trigger input means, and the computer connected thereto to execute the steps of:

recording the encrypted data in the recording means;

receiving destruction trigger information for starting a processing of preventing the encrypted data from being decrypted from the destruction trigger input means;

detecting first divisional encrypted data which is divisional encrypted data to be first decrypted in all the divisional encrypted data from the encrypted data; and

causing an irreversible change in the first divisional encrypted data detected in the step of detecting in the encrypted data recorded in the recording means when the destruction trigger information is received.

16. A computer program for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each piece of the divisional encrypted data except for the divisional encrypted data to be last decrypted containing specifying information for specifying a key for decrypting the divisional encrypted data to be next decrypted to enable the decryption, the encrypted data containing first specifying information for specifying the key for decrypting the divisional encrypted data which is the divisional encrypted data to be first decrypted, the computer program being for causing a computer included in an information processing apparatus comprising recording means, destruction trigger input means, and the computer connected thereto to execute the steps of:

recording the encrypted data in the recording means;

receiving destruction trigger information for starting a processing of preventing the encrypted data from being decrypted from the destruction trigger input means;

detecting the first specifying information contained in the encrypted data or first divisional encrypted data which is the first to be decrypted in all the divisional encrypted data from the encrypted data; and

causing an irreversible change in the first specifying information or the first divisional encrypted data, which is detected in the step of detecting, in the encrypted data recorded in the recording means when the destruction trigger information is received.

17. A computer program for processing encrypted data which is a unit of a plurality of pieces of divisional encrypted data generatedby encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, eachpiece of the divisional encrypted data except for the divisional encrypted data to be last decrypted containing specifying information for specifying a key for decrypting the divisional encrypted data to be next decrypted to enable the decryption, the encrypted data containing timing specifying information for specifying timing to prevent the encrypted data from being decrypted, the computer program being for causing a computer included in an information processing apparatus comprising the computer connected to recording means to execute the steps of:

recording the encrypted data in the recording means;
reading the timing specifying information from the encrypted data;
detecting first divisional encrypted data which is divisional encrypted data to be first decrypted in all the divisional encrypted data from the encrypted data; and
monitoring whether or not the timing specified by the timing specifying information read in the step of reading has come and causing an irreversible change in the first divisional encrypted data detected in the step of detecting if the timing has come.

**18.** A computer program for processing encrypted data which is a unit of a plurality of pieces of divisional encrypted data generated by encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, eachpieceof the divisional encrypted data except for the divisional encrypted data to be last decrypted containing specifying information for specifying a key for decrypting the divisional encrypted data to be next decrypted to enable the decryption, the encrypted data containing first specifying information for specifying the key for decrypting divisional encrypted data which is divisional encrypted data to be first decrypted and timing specifying information for specifying timing to prevent the encrypted data from being decrypted, the computer program being for causing a computer included in an information processing apparatus comprising the computer connected to recording means to execute the steps of:

recording the encrypted data in the recording means;
reading the timing specifying information from the encrypted data;
detecting the first specifying information contained in the encrypted data or first divisional encrypted data which is the first to be decrypted in all the divisional encrypted data from the encrypted data; and
monitoring whether or not the timing specified by the timing specifying information read in the step of reading has come and causing an irreversible change in the first specifying information or the first divisional encrypted data, which is detected in the step of detecting, if the timing has come.

**19.** A computer program for processing encrypted data which is a unit of a plurality of pieces of divisional encrypted data generatedby encryptingaplurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, each piece of the divisional encrypted data except for the divisional encrypted data to be last decrypted containing specifying information for specifying a key for decrypting the divisional encrypted data to be next decrypted to enable the decryption, the encrypted data containing timing specifying information for specifying timing to prevent the encrypted data from being decrypted, the computer program being for causing a computer included in an information processing apparatus comprising recording means, decryption trigger input means, and the computer connected thereto to execute the steps of:

recording the encrypted data in the recording means;
receiving decryption trigger information for starting the decryption of the encrypted data from the decryption trigger input means;
reading the timing specifying information from the encrypted data when the step of receiving occurs;
detecting first divisional encrypted data which is divisional encrypted data to be first decrypted in all the divisional encrypted data from the encrypted data; and
receiving the timing specifying information read in the step of reading when the step of receiving occurs to determine whether or not the timing specified by the timing specifying information has come and decrypting the encrypted data if the timing has not come yet while causing an irreversible change in the first divisional encrypted data detected in the step of detecting if the timing has come.

**20.** A computer program for processing encrypted data which is a unit of a plurality of pieces of divisional encrypted data generatedby encrypting a plurality of pieces of divisional plaintext data by using a plurality of keys generated by dividing plaintext data to be processed into data being composed of a predetermined number of bits, at least one of the keys differs from the other(s), the encrypted data being decrypted back into the data to be processed by decrypting the divisional encrypted data in a predetermined order to connect the decrypted data into a unit, eachpiece of the divisional encrypted data except for the divisional encrypted data to be last decrypted containing specifying information for specifying a key for decrypting the divisional encrypted data to be next decrypted to enable the decryption, the encrypted data containing first specifying information for specifying the key for decrypting divisional encrypted data which is divisional encrypted data to be first decrypted and timing specifying information for specifying timing to prevent the encrypted data from being decrypted, the computer program being for causing a computer included in an information processing apparatus comprising recording means, decryption trigger input means, and the computer connected thereto to execute the steps of:

recording the encrypted data in the recording means;
receiving decryption trigger information for starting the decryption of the encrypted data from the decryption trigger input means;
reading the timing specifying information from the encrypted data when the step of receiving occurs;
detecting the first specifying information contained in the encrypted data or first divisional encrypted data which is the first to be decrypted in all the divisional encrypted data from the encrypted data; and
receiving the timing specifying information read in the step of reading when the step of receiving occurs to determine whether or not the timing specified by the timing specifying information has come and decrypting the encrypted data if the timing has not come yet while causing an irreversible change in the first specifying information or the first divisional encrypted data, which is detected in the step of detecting, if the timing has come.

21. An information processing apparatus for processing encrypted data obtained by encryptingplaintext data to be processed, the encrypted data containing specifying information for decrypting the encrypted data, comprising:

recording means for recording the encrypted data;
detection means for detecting the specifying information from the encrypted data; and
processing means for causing an irreversible change in the specifying information detected by the detection means in the encrypted data recorded in the recording means when a predetermined condition is satisfied.

22. An information processing method for processing encrypted data obtained by encrypting plaintext data to be processed, the encrypted data containing specifying information for decrypting the encrypted data, the information processing method being executed in an information processing apparatus comprising recording means and processing means, the information processing method comprising the steps, executed by the processing means, of:

recording the encrypted data in the recording means;
detecting the specifying information from the encrypted data; and
causing an irreversible change in the specifying information detected in the step of detecting in the encrypted data recorded in the recording means when a predetermined condition is satisfied.

23. A computer program for processing encrypted data obtained by encrypting plaintext data to be processed, the encrypted data containing specifying information for decrypting the encrypted data, the computer program being for causing a computer included in an information processing apparatus comprising recording means and the computer connected thereto to execute the steps of:

recording the encrypted data in the recording means;
detecting the specifying information from the encrypted data; and
causing an irreversible change in the specifying information detected in the step of detecting in the encrypted data recorded in the recording means when a predetermined condition is satisfied.

ENCRYPTION PROCESSING APPARATUS
1

NETWORK N

DECRYPTION PROCESSING APPARATUS
2

DECRYPTION PROCESSING APPARATUS
2

DECRYPTION PROCESSING APPARATUS
2

DECRYPTION PROCESSING APPARATUS
2

FIG. 1

FIG. 2

**ENCRYPTION DEVICE 27**

CONNECTING UNIT 280

IF 271

PRE-PROCESSING UNIT 272

ENCRYPTION UNIT 273

BUS

ALGORITHM GENERATING UNIT 275

KEY GENERATING UNIT 276

SOLUTION GENERATING UNIT 274

SPECIFYING INFORMATION GENERATING UNIT 277

TIMING SPECIFYING INFORMATION GENERATING UNIT 278

HEADER GENERATING UNIT 279

FIG. 3

FIG. 4

FIG. 5

FIG. 6

FIG. 7

START

READ OUT DATA TO BE PROCESSED — S1101

INPUT DESTINATION INFORMATION AND INFORMATION FOR GENERATING TIMING SPECIFYING INFORMATION — S1102

GENERATE HEADER DATA — S1103

DIVIDE DATA TO BE PROCESSED TO GENERATE DIVISIONAL PLAINTEXT DATA — S1104

ENCRYPT DIVISIONAL PLAINTEXT DATA TO GENERATE DIVISIONAL ENCRYPTED DATA — S1105

GATHER HEADER DATA AND DIVISIONAL ENCRYPTED DATA INTO UNIT TO GENERATE ENCRYPTED DATA — S1106

END

FIG. 8

START

RECEIVE ENCRYPTED DATA — S1301

EXTRACT HEADER DATA FROM
ENCRYPTED DATA — S1302

ANALYZE CONTENT INDICATED BY
SPECIFYING INFORMATION — S1303

GENERATE SOLUTION — S1304

GENERATE ALGORITHM AND KEY FOR
DECRYPTING DIVISIONAL ENCRYPTED DATA — S1305

DECRYPT DIVISIONAL ENCRYPTED DATA — S1306

CONNECT DIVISIONAL PLAINTEXT DATA TO
GENERATE DATA TO BE PROCESSED — S1307

END

FIG. 9

FIG. 10

DECRYPTION DEVICE 37

CONNECTING
UNIT
379

BUS

IF
371

PRE-
PROCESSING
UNIT
372

DECRYPTION UNIT
373

ALGORITHM
STORAGE
UNIT
381

KEY
STORAGE
UNIT
382

SPECIFYING INFORMATION
ANALYZING UNIT
377

FIG. 11

<table>
<tr><td colspan="2">**INTERNATIONAL SEARCH REPORT**</td><td>International application No.<br>PCT/JP2007/075376</td></tr>
</table>

A. CLASSIFICATION OF SUBJECT MATTER
*H04L9/14*(2006.01)i, *H04L9/26*(2006.01)i

According to International Patent Classification (IPC) or to both national classification and IPC

B. FIELDS SEARCHED

Minimum documentation searched (classification system followed by classification symbols)
H04L9/14, H04L9/26

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-101529 A (Toshiba Corp.),<br>04 April, 2003 (04.04.03),<br>Par. Nos. [0006], [0042] to [0050], [0057],<br>[0058]<br>(Family: none) | 1-23 |
| Y | JP 2004-13763 A (Toshiba Corp.),<br>15 January, 2004 (15.01.04),<br>Par. No. [0044]<br>(Family: none) | 1,2,7-10,15,<br>16,21-23 |
| Y | JP 2004-14079 A (Pioneer Corp.),<br>15 January, 2004 (15.01.04),<br>Par. Nos. [0081] to [0092]<br>& US 2004/0035290 A1 | 3-6,11-14,<br>17-20 |

☐ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>29 January, 2008 (29.01.08) | Date of mailing of the international search report<br>05 February, 2008 (05.02.08) |
|---|---|
| Name and mailing address of the ISA/<br>Japanese Patent Office | Authorized officer |
| Facsimile No. | Telephone No. |

Form PCT/ISA/210 (second sheet) (April 2007)